# EUROPEAN PATENT APPLICATION

(11) **EP 4 080 929 A1**
(43) Date of publication of application: **26.10.2022**
(21) Application number: 20915704.9
(22) Date of filing: 28.10.2020
(51) Int. Cl.: H04W 24/02, H04W 52/02

(54) **WIRELESS COMMUNICATION METHOD, TERMINAL DEVICE, AND NETWORK DEVICE**

(30) Priority: 22.01.2020 CN 202010074661
(71) Applicant: Huawei Technologies Co., Ltd., Longgang Shenzhen, Guangdong 518129 (CN)
(72) Inventor: KUANG, Yiru, Shenzhen, Guangdong 518129 (CN); XUE, Yifan, Shenzhen, Guangdong 518129 (CN)
(74) Representative: Pfenning, Meinig & Partner mbB
(86) International application number: PCT/CN2020/124351
(87) International publication number: WO 2021/147424

(57) **Abstract**

This application provides a wireless communication method, a terminal device, and a network device. The method includes: A terminal device receives, on a first carrier, a first message sent by a network device, where the first message indicates the terminal device to perform at least one of physical downlink control channel PDCCH monitoring and data transmission on a second carrier. When the terminal device is in a sleep state on the second carrier, after a first duration, the terminal device performs at least one of PDCCH monitoring and data transmission on the second carrier. In the foregoing technical solution, the terminal device may perform a specific behavior on the second carrier after the first duration after the reception of the first message. The terminal device may complete a process of waking up from the sleep state within the first duration. In this way, the terminal device may not monitor a PDCCH and/or transmit data in the process of waking up from the sleep state, to improve communication quality of the terminal device.

## Description

This application claims priority to Chinese Patent Application No. 202010074661.4, filed with the China National Intellectual Property Administration on January 22, 2020 and entitled "WIRELESS COMMUNICATION METHOD, TERMINAL DEVICE, AND NETWORK DEVICE", which is incorporated herein by reference in its entirety.

### TECHNICAL FIELD

This application relates to the communications field, and more specifically, to a wireless communication method, a terminal device, and a network device.

### BACKGROUND

To reduce power consumption of a terminal device, a network device may configure a discontinuous reception (discontinuous reception, DRX) mechanism for a terminal device in a radio resource control (radio resource control, RRC) connected state, so that the terminal device can be woken up from a sleep state when monitoring is required, to monitor a physical downlink control channel (physical downlink control channel, PDCCH); and can enter a sleep state when monitoring is not required.

Carrier aggregation (CA) is to aggregate two or more component carriers (component carrier, CC) to support a larger transmission bandwidth.

Usually, signaling or data cannot be effectively transmitted in a process of waking up the terminal device from the sleep state. In a carrier aggregation scenario, if the terminal device is in an active state on one carrier and is in a sleep state on another carrier, the terminal device needs to be woken up from the sleep state on the another carrier. However, in this process, the network device may schedule the terminal device, and it is possible that signaling or data cannot be effectively transmitted in the process of waking up the terminal device from the sleep state.

### SUMMARY

This application provides a wireless communication method, a terminal device, and a network device, to improve communication quality of the terminal device.

According to a first aspect, a wireless communication method is provided, including: A terminal device receives, on a first carrier, a first message sent by a network device, where the first message indicates the terminal device to perform at least one of physical downlink control channel PDCCH monitoring and data transmission on a second carrier. When the terminal device is in a sleep state on the second carrier, after a first duration, the terminal device performs at least one of PDCCH monitoring and data transmission on the second carrier.

In this embodiment of this application, when receiving the first message on the first carrier, the terminal device is in the sleep state on the second carrier. After the first duration after the reception of the first message, the terminal device performs at least one of PDCCH monitoring and data transmission on the second carrier. In this way, in a process of waking up the terminal device from the sleep state, the terminal device may not monitor a PDCCH and/or transmit data. This can avoid a case in which the terminal device cannot monitor a PDCCH sent by the network device to the terminal device or cannot receive data sent by the network device, and cannot effectively receive and send data, to improve communication quality of the terminal device.

It should be understood that the first duration is used to wake up the terminal device from the sleep state on the second carrier.

It should be understood that an action performed by the terminal device after the first duration is consistent with an action that is performed by the terminal device on the second carrier and that is indicated by the first message. For example, if the first message indicates the terminal device to monitor a PDCCH on the second carrier, the terminal device monitors a PDCCH on the second carrier after the first duration. For another example, if the first message indicates the terminal device to transmit data on the second carrier, the terminal device transmits data on the second carrier after the first duration.

It should be further understood that that the terminal device is in the sleep state on the second carrier may be understood as: The terminal device is in the sleep state within a DRX cycle on the second carrier.

With reference to the first aspect, in a possible implementation, the method further includes: The terminal device starts a first timer after the first duration, where the terminal device can perform at least one of PDCCH monitoring and data transmission on the second carrier in a running process of the first timer; or the terminal device starts the first timer when receiving the first message, where the terminal device does not monitor a PDCCH or transmit data on the second carrier within the first duration.

Optionally, the terminal device starts the first timer after the first duration, and the terminal device can perform at least one of PDCCH monitoring and data transmission on the second carrier in the running process of the first timer.

In other words, the terminal device can perform a specific behavior or action in the running process of the first timer, for example, monitor a PDCCH and/or transmit data. In this way, after the first duration, the terminal device has been woken up from the sleep state. In this case, the terminal device starts the first timer, and the terminal device is already in an active state. The terminal device can monitor a PDCCH and/or transmit data in the running process of the first timer, and is woken up from the sleep state beyond the running process of the first timer. This avoids a case in which the terminal device cannot effectively transmit data in a warm-up process in the running process of the first timer, and can improve communication quality of the terminal device in a carrier aggregation scenario.

Optionally, the terminal device starts the first timer when receiving the first message, and the terminal device does not monitor a PDCCH or transmit data on the second carrier within the first duration.

The terminal device starts the first timer when receiving the first message. The terminal device may perform a specific behavior on the second carrier in the running process of the first timer, for example, monitor a PDCCH and/or transmit data. In this embodiment of this application, a behavior of the terminal device within the first duration (that is, in a process of waking up the terminal device from the sleep state) is limited, to prevent the terminal device from monitoring a PDCCH and/or transmitting data in the process of being woken up from the sleep state, to improve communication quality of the terminal device in the carrier aggregation scenario.

With reference to the first aspect, in a possible implementation, the method further includes: The terminal device starts a second timer after the first duration; or the terminal device starts the second timer when receiving the first message, where the terminal device can perform at least one of PDCCH monitoring and data transmission on the first carrier in a running process of the second timer.

The terminal device may start the second timer when receiving the first message, or may start the second timer after the first duration. In other words, the terminal device may start the first timer and the second timer at the same time, or may not start the first timer and the second timer at the same time. When the terminal device starts the first timer and the second timer at the same time, the first timer and the second timer may be a same timer.

With reference to the first aspect, in a possible implementation, the first duration is longer than or equal to a state transition duration, and the state transition duration is a time period required to wake up the terminal device from the sleep state.

It should be understood that waking up the terminal device from the sleep state may be understood as a process from the sleep state to a state in which the terminal device can effectively perform a specific action or behavior, for example, monitor a PDCCH and/or transmit data. Specifically, when the first message indicates the terminal device to monitor a PDCCH on the second carrier, a process of waking up the terminal device from the sleep state may be understood as a process from the sleep state to a state in which the terminal device can effectively monitor a PDCCH. When the first message indicates the terminal device to transmit data on the second carrier, a process of waking up the terminal device from the sleep state may be understood as a process from the sleep state to a state in which the terminal device can effectively transmit data. In this embodiment of this application, that the terminal device effectively monitors a PDCCH or effectively transmits data may be understood as: The terminal device has completed a warm-up process, and has enabled hardware, has completed a beam management process, or the like, and is ready to transmit signaling or data.

With reference to the first aspect, in a possible implementation, when the first message indicates the terminal device to transmit data on the second carrier, a time interval between the data and the first message is longer than or equal to the first duration.

The terminal device may implement cross-carrier scheduling by using the first carrier and the second carrier. In this case, a time interval between a position of the data transmitted by the terminal device on the second carrier and a position of the first message (for example, DCI) received by the terminal device on the first carrier should be longer than the first duration. This can ensure that the terminal device completes the process of being woken up from the sleep state within the first duration, and can correctly transmit data after the first duration, to improve communication quality in cross-carrier scheduling.

With reference to the first aspect, in a possible implementation, at least one sleep level is configured for the terminal device, and the method further includes: The terminal device receives configuration information sent by the network device, where the configuration information indicates at least one duration, the at least one duration includes the first duration, and each of the at least one sleep level corresponds to one of the at least one duration.

Different time periods may be required to wake up the terminal device from the sleep state at different sleep levels. The network device configures at least one duration for the terminal device, and each of the at least one sleep level corresponds to one of the at least one duration. In this way, when the terminal device is at each sleep level, warm-up may be completed within a duration corresponding to the sleep level. That is, the terminal device is woken up from the sleep state.

With reference to the first aspect, in a possible implementation, a plurality of durations in the at least one duration and a plurality of sleep levels in the at least one sleep level are configured for the terminal device, and the method further includes: The terminal device determines the first duration from the plurality of durations based on a current sleep level.

With reference to the first aspect, in a possible implementation, the method further includes: When one sleep level is configured for the terminal device, the terminal device sends, to the network device, a state transition duration corresponding to the sleep level; or when a plurality of sleep levels are configured for the terminal device, the terminal device sends, to the network device, the plurality of sleep levels and a state transition duration corresponding to each of the plurality of sleep levels, where the state transition duration is a time period required to wake up the terminal device from the sleep state.

When one sleep level is configured for the terminal device, time periods required to wake up the terminal device from the sleep state are approximately the same. Therefore, the terminal device may report, to the network device, the time period required to wake up the terminal device from the sleep state, that is, the state transition duration. When a plurality of sleep levels are configured for the terminal device, time periods for waking up the terminal device from the sleep state may be different when the terminal device is at different sleep levels. That is, when the terminal device is at different sleep levels, state transition durations may be different. Therefore, the terminal device may report a correspondence between a sleep level of the terminal device and a state transition duration to the network device, so that the network device configures, for the terminal device, a first duration corresponding to each sleep level.

With reference to the first aspect, in a possible implementation, the first message includes physical downlink control information DCI.

With reference to the first aspect, in a possible implementation, when a preset condition is met, the first message indicates the terminal device to perform at least one of PDCCH monitoring and data transmission on the second carrier.

With reference to the first aspect, in a possible implementation, the preset condition includes: The first message includes indication information; or the first message includes an indication field, and the indication field indicates the terminal device to perform at least one of PDCCH monitoring and data transmission on the second carrier; or an occasion on which the terminal device receives the first message meets a preset rule.

In this way, the terminal device may not need to monitor a PDCCH and/or transmit data on the second carrier each time the terminal device receives the first message on the first carrier, to reduce power consumption of the terminal device on the second carrier.

With reference to the first aspect, in a possible implementation, a frequency range of the first carrier is below 6 GHz, and/or a frequency range of the second carrier is a millimeter-wave band.

According to a second aspect, a wireless communication method is provided, including: A network device sends a first message to a terminal device on a first carrier, where the first message indicates the terminal device to perform at least one of physical downlink control channel PDCCH monitoring and data transmission on a second carrier. When the terminal device is in a sleep state on the second carrier, after a first duration, the network device performs at least one of PDCCH sending and data transmission to the terminal device on the second carrier.

In this embodiment of this application, when the network device sends the first message on the first carrier, the terminal device is in the sleep state on the second carrier. After the first duration after the reception of the first message, the network device performs at least one of PDCCH sending and data transmission to the network device on the second carrier. In this way, in a process of waking up the terminal device from the sleep state, the terminal device may not monitor a PDCCH and/or transmit data. This can avoid a case in which the terminal device cannot monitor a PDCCH sent by the network device to the terminal device or cannot receive data sent by the network device, and cannot effectively receive and send data, to improve communication quality.

With reference to the second aspect, in a possible implementation, the first duration is longer than or equal to a state transition duration, and the state transition duration is a time period required to wake up the terminal device from the sleep state.

With reference to the second aspect, in a possible implementation, when the first message indicates the terminal device to transmit data on the second carrier, a time interval between the data and the first message is longer than or equal to the first duration.

With reference to the second aspect, in a possible implementation, at least one sleep level is configured for the terminal device, and the method further includes: The network device sends configuration information to the terminal device, where the configuration information indicates at least one duration, the at least one duration includes the first duration, and each of the at least one sleep level corresponds to one of the at least one duration.

With reference to the second aspect, in a possible implementation, the method further includes: When one sleep level is configured for the terminal device, the network device receives a state transition duration that corresponds to the sleep level and that is sent by the terminal device; or when a plurality of sleep levels are configured for the terminal device, the network device receives the plurality of sleep levels and a state transition duration corresponding to each of the plurality of sleep levels that are sent by the terminal device, where the state transition duration is a time period required for the terminal device to transit from the sleep state to an active state.

With reference to the second aspect, in a possible implementation, the first message includes physical downlink control information DCI.

With reference to the second aspect, in a possible implementation, when a preset condition is met, the first message indicates the terminal device to perform at least one of PDCCH monitoring and data transmission on the second carrier.

With reference to the second aspect, in a possible implementation, the preset condition includes: The first message includes indication information; or the first message includes an indication field, and the indication field indicates the terminal device to perform at least one of PDCCH monitoring and data transmission on the second carrier; or an occasion on which the network device sends the first message meets a preset rule.

With reference to the second aspect, in a possible implementation, a frequency range of the first carrier is below 6 GHz, and/or a frequency range of the second carrier is a millimeter-wave band.

According to a third aspect, a wireless communication method is provided, including: A terminal device receives, on a first carrier, a first message sent by a network device, where the first message indicates whether the terminal device starts a first timer on a second carrier. The terminal device starts the first timer based on the first message, and the terminal device performs at least one of physical downlink control channel PDCCH monitoring and data transmission on the second carrier in a running process of the first timer.

In this embodiment of this application, the terminal device receives the first message on the first carrier, where the first message indicates whether the terminal device starts the first timer on the second carrier. The terminal device starts the first timer only when the first message indicates the terminal device to start the first timer on the second carrier. In this way, the terminal device does not need to monitor a PDCCH and/or transmit data on the second carrier each time the first message is received on the first carrier, to reduce power consumption of the terminal device on the second carrier.

With reference to the third aspect, in a possible implementation, that the terminal device starts the first timer based on the first message includes: When the first message includes indication information, the terminal device starts the first timer; or when the first message includes an indication field and the indication field indicates to start the first timer, the terminal device starts the first timer; or when an occasion on which the terminal device receives the first message meets a preset rule, the terminal device starts the first timer.

With reference to the third aspect, in a possible implementation, when the terminal device receives the first message, if the terminal device is in a sleep state on the second carrier, the method further includes: After a first duration after the reception of the first message, the terminal device performs at least one of physical downlink control channel PDCCH monitoring and data transmission on the second carrier.

With reference to the third aspect, in a possible implementation, the method further includes: The terminal device starts the first timer after the first duration; or the terminal device starts the first timer when receiving the first message, where the terminal device does not monitor a PDCCH or transmit data on the second carrier within the first duration.

With reference to the third aspect, in a possible implementation, the method further includes: The terminal device starts a second timer after the first duration after the reception of the first message; or the terminal device starts the second timer when receiving the first message, where the terminal device can perform at least one of PDCCH monitoring and data transmission on the first carrier in a running process of the second timer.

With reference to the third aspect, in a possible implementation, the first duration is longer than or equal to a state transition duration, and the state transition duration is a time period required to wake up the terminal device from the sleep state.

With reference to the third aspect, in a possible implementation, when the first message further indicates the terminal device to transmit data on the second carrier, a time interval between the data and the first message is longer than or equal to the first duration.

With reference to the third aspect, in a possible implementation, at least one sleep level is configured for the terminal device, and the method further includes: The terminal device receives configuration information sent by the network device, where the configuration information indicates at least one duration, the at least one duration includes the first duration, and each of the at least one sleep level corresponds to one of the at least one duration.

With reference to the third aspect, in a possible implementation, a plurality of durations in the at least one duration and a plurality of sleep levels in the at least one sleep level are configured for the terminal device, and the method further includes: The terminal device determines the first duration from the plurality of durations based on a current sleep level.

With reference to the third aspect, in a possible implementation, the method further includes: When one sleep level is configured for the terminal device, the terminal device sends, to the network device, a state transition duration corresponding to the sleep level; or when a plurality of sleep levels are configured for the terminal device, the terminal device sends, to the network device, the plurality of sleep levels and a state transition duration corresponding to each of the plurality of sleep levels, where the state transition duration is a time period required to wake up the terminal device from the sleep state.

With reference to the third aspect, in a possible implementation, the first message includes physical downlink control information DCI.

With reference to the third aspect, in a possible implementation, a frequency range of the first carrier is below 6 GHz, and/or a frequency range of the second carrier is a millimeter-wave band.

According to a fourth aspect, a network communication method is provided, including: A network device sends a first message to a terminal device on a first carrier, where the first message indicates whether the terminal device starts a first timer on a second carrier, and the terminal device can perform at least one of physical downlink control channel PDCCH monitoring and data transmission on the second carrier in a running process of the first timer.

The network device indicates, by using the first message sent on the first carrier, whether the terminal device monitors a PDCCH or transmits data on the second carrier. In this way, the terminal device does not need to monitor a PDCCH and/or transmit data on the second carrier each time the terminal device receives the first message on the first carrier, to reduce power consumption of the terminal device on the second carrier.

With reference to the fourth aspect, in a possible implementation, when the following condition is met, the first message indicates the terminal device to start the first timer on the second carrier: The first message includes indication information; or the first message includes an indication field, and the indication field indicates to start the first timer; or a sending occasion of the first message meets a preset rule.

With reference to the fourth aspect, in a possible implementation, when the terminal device is in a sleep state, the method further includes: After a first duration since sending of the first message, the network device performs at least one of PDCCH sending and data transmission to the terminal device on the second carrier.

With reference to the fourth aspect, in a possible implementation, the first duration is longer than or equal to a state transition duration, and the state transition duration is a time period required to wake up the terminal device from the sleep state.

With reference to the fourth aspect, in a possible implementation, at least one sleep level is configured for the terminal device, and the method further includes: The network device sends configuration information to the terminal device, where the configuration information indicates at least one duration, the at least one duration includes the first duration, and each of the at least one sleep level corresponds to one of the at least one duration.

With reference to the fourth aspect, in a possible implementation, the method further includes: When one sleep level is configured for the terminal device, the network device receives a state transition duration that corresponds to the sleep level and that is sent by the terminal device; or when a plurality of sleep levels are configured for the terminal device, the network device receives the plurality of sleep levels and a state transition duration corresponding to each of the plurality of sleep levels that are sent by the terminal device, where the state transition duration is a time period required for the terminal device to transit from the sleep state to an active state.

With reference to the fourth aspect, in a possible implementation, the first message includes physical downlink control information DCI.

With reference to the fourth aspect, in a possible implementation, a frequency range of the first carrier is below 6 GHz, and/or a frequency range of the second carrier is a millimeter-wave band.

According to a fifth aspect, a terminal device is provided, and includes a module or unit configured to perform the method in any one of the first aspect or the possible implementations of the first aspect, or includes a module or unit configured to perform the method in any one of the third aspect or the possible implementations of the third aspect. The module or unit may be a hardware circuit, may be software, or may be implemented by a combination of a hardware circuit and software.

According to a sixth aspect, a network device is provided, and includes a module or unit configured to perform the method in any one of the second aspect or the possible implementations of the second aspect, or includes a module or unit configured to perform the method in any one of the fourth aspect or the possible implementations of the fourth aspect. The module or unit may be a hardware circuit, may be software, or may be implemented by a combination of a hardware circuit and software.

According to a seventh aspect, a communications apparatus is provided. The communications apparatus includes at least one processor and a communications interface, and the communications interface is configured to exchange information between the communications apparatus and another communications apparatus. When program instructions are executed in the at least one processor, the communications apparatus is enabled to perform the method in any one of the first aspect or the possible implementations of the first aspect, or the communications apparatus is enabled to perform the method in the third aspect or the possible implementations of the third aspect.

Optionally, the communications apparatus may further include a memory, the memory is coupled to the processor, and the processor is configured to implement the method described in any one of the first aspect or the possible implementations of the first aspect, or is configured to implement the method described in any one of the third aspect or the possible implementations of the third aspect. For example, the memory is configured to store instructions and data. When executing the instructions stored in the memory, the processor may implement the method described in any one of the first aspect or the possible implementations of the first aspect, or implement the method described in any one of the third aspect or the possible implementations of the third aspect.

For example, the communications interface may be a transceiver, a circuit, a bus, a module, a pin, or another type of communications interface.

Optionally, the communications apparatus in the seventh aspect may be a terminal device, or may be a component (for example, a chip or a circuit) used in the terminal device. The another communications apparatus may be a network device, or may be a component (for example, a chip or a circuit) used in the network device.

According to an eighth aspect, a communications apparatus is provided. The communications apparatus includes at least one processor and a communications interface, and the communications interface is configured to exchange information between the communications apparatus and another communications apparatus. When program instructions are executed in the at least one processor, the communications apparatus is enabled to perform the method in any one of the second aspect or the possible implementations of the second aspect, or the communications apparatus is enabled to perform the method in the fourth aspect or the possible implementations of the fourth aspect.

Optionally, the communications apparatus may further include a memory, the memory is coupled to the processor, and the processor is configured to implement the method described in any one of the second aspect or the possible implementations of the second aspect, or is configured to implement the method described in any one of the fourth aspect or the possible implementations of the fourth aspect. For example, the memory is configured to store instructions and data. When executing the instructions stored in the memory, the processor may implement the method described in any one of the second aspect or the possible implementations of the second aspect, or implement the method described in any one of the fourth aspect or the possible implementations of the fourth aspect.

For example, the communications interface may be a transceiver, a circuit, a bus, a module, a pin, or another type of communications interface.

Optionally, the communications apparatus in the eighth aspect may be a network device, or may be a component (for example, a chip or a circuit) used in the network device. The another communications apparatus may be a terminal device, or may be a component (for example, a chip or a circuit) used in the terminal device.

According to a ninth aspect, a chip system is provided. The chip system includes a processor used by a terminal device to implement a function in any one of the first aspect or the possible implementations of the first aspect, or used by a terminal device to implement a function in any one of the third aspect or the possible implementations of the third aspect, for example, generating, receiving, sending, or processing data and/or information in the foregoing methods. In a possible design, the chip system further includes a memory. The memory is configured to store program instructions and data that are necessary for the terminal device. The chip system may include a chip, or may include a chip and another discrete component.

According to a tenth aspect, a chip system is provided. The chip system includes a processor used by a network device to implement a function in any one of the second aspect or the possible implementations of the second aspect, or used by a terminal device to implement a function in any one of the fourth aspect or the possible implementations of the fourth aspect, for example, generating, receiving, sending, or processing data and/or information in the foregoing methods. In a possible design, the chip system further includes a memory. The memory is configured to store program instructions and data that are necessary for the network device. The chip system may include a chip, or may include a chip and another discrete component.

According to an eleventh aspect, a computer-readable storage medium is provided. The computer-readable storage medium stores a computer program. When the computer program is run on a computer, the computer is enabled to perform the method according to any one of the first aspect or the possible implementations of the first aspect, or the computer is enabled to perform the method according to any one of the third aspect or the possible implementations of the third aspect.

According to a twelfth aspect, a computer-readable storage medium is provided. The computer-readable storage medium stores a computer program. When the computer program is run on a computer, the computer is enabled to perform the method according to any one of the second aspect or the possible implementations of the second aspect, or the computer is enabled to perform the method according to any one of the fourth aspect or the possible implementations of the fourth aspect.

According to a thirteenth aspect, a computer program product including instructions is provided. When the computer program product runs on a computer, the computer is enabled to perform the method according to any one of the first aspect or the possible implementations of the first aspect, or the computer is enabled to perform the method according to any one of the third aspect or the possible implementations of the third aspect.

According to a fourteenth aspect, a computer program product including instructions is provided. When the computer program product runs on a computer, the computer is enabled to perform the method according to any one of the second aspect or the possible implementations of the second aspect, or the computer is enabled to perform the method according to any one of the fourth aspect or the possible implementations of the fourth aspect.

According to a fifteenth aspect, a communications system is provided, and includes the terminal device described in the fifth aspect and the network device described in the sixth aspect; or the communications system includes the communications apparatus described in the seventh aspect and the communications apparatus described in the eighth aspect.

### BRIEF DESCRIPTION OF DRAWINGS

FIG. 1 is a schematic diagram of an application scenario according to an embodiment of this application;
FIG. 2 is a schematic diagram of a state of a terminal device in a DRX mode according to an embodiment of this application;
FIG. 3 is a schematic diagram of DRX cycle configuration of component carriers in a carrier aggregation scenario;
FIG. 4 is a schematic diagram of DRX cycle configuration of component carriers in a carrier aggregation scenario;
FIG. 5 is a schematic diagram of timer configuration within DRX cycles of component carriers in a carrier aggregation scenario;
FIG. 6 is a schematic diagram of state transition of a terminal device;
FIG. 7 is a schematic diagram of timer configuration within a DRX cycle of a terminal device in the conventional technology;
FIG. 8 is a schematic flowchart of a wireless communication method according to an embodiment of this application;
FIG. 9 is a schematic flowchart of another wireless communication method according to an embodiment of this application;
FIG. 10 is a schematic diagram of a state of a terminal device in a wireless communication method according to an embodiment of this application;
FIG. 11 is a schematic diagram of a state of a terminal device in a wireless communication method according to an embodiment of this application;
FIG. 12 is a schematic diagram of a state of a terminal device in a wireless communication method according to another embodiment of this application;
FIG. 13 is a schematic diagram of a state of a terminal device in a wireless communication method according to another embodiment of this application;
FIG. 14 is a schematic diagram of a state of a terminal device in a wireless communication method according to still another embodiment of this application;
FIG. 15 is a schematic diagram of a state of a terminal device in a wireless communication method according to yet another embodiment of this application;
FIG. 16 is a schematic diagram of a state of a terminal device in a wireless communication method according to yet another embodiment of this application;
FIG. 17 is a schematic diagram of a state of a terminal device in a wireless communication method according to yet another embodiment of this application;
FIG. 18 is a schematic diagram of a structure of a terminal device according to an embodiment of this application;
FIG. 19 is a schematic diagram of a structure of a communications apparatus according to an embodiment of this application;
FIG. 20 is a schematic diagram of a structure of a network device according to another embodiment of this application; and
FIG. 21 is a schematic diagram of a structure of a communications apparatus according to another embodiment of this application.

### DESCRIPTION OF EMBODIMENTS

The following describes technical solutions of this application with reference to the accompanying drawings.

The technical solutions in embodiments of this application may be used in various communications systems, including but not limited to a long term evolution (long term evolution, LTE) system, an LTE frequency division duplex (frequency division duplex, FDD) system, an LTE time division duplex (time division duplex, TDD) system, an advanced long term evolution (advanced long term evolution, LTE-A) system, a worldwide interoperability for microwave access (worldwide interoperability for microwave access, WiMAX) communications system, a fifth generation (5th-generation, 5G) mobile communications system (also referred to as a new radio (new radio, NR) system), a narrow band internet of things (narrow band internet of things, NB-IoT) system, an enhanced machine type communications (enhanced machine-type communication, eMTC) system or an LTE-machine-to-machine (LTE-machine-to-machine, LTE-M) system, a future sixth generation mobile communications system, and the like.

The technical solutions in embodiments of this application may be used for wireless communication between communications devices. The communications device may perform wireless communication through an air interface resource. The communications device may include a network device and a terminal device, the network device may be further referred to as a network side device, and the terminal device may be further referred to as user equipment (user equipment, UE). The air interface resource may include at least one of a time domain resource, a frequency domain resource, a code resource, and a spatial resource. In embodiments of this application, "at least one" may also be described as "one or more", and "a plurality of' may be "two, three, four, or more". This is not limited in this application. It should be noted that, in embodiments of this application, the term "wireless communication" may be further referred to as "communication" for short, and the term "communication" may be further described as "data transmission", "signal transmission", "information transmission", "transmission", or the like. In embodiments of this application, the transmission may include sending or receiving. For example, the transmission may be uplink transmission. For example, the terminal device may send a signal to the network device. The transmission may alternatively be downlink transmission. For example, the network device may send a signal to the terminal device.

For ease of understanding, the following first describes related concepts in this application.

A physical downlink control channel (physical downlink control channel, PDCCH) is used to carry scheduling and other control information, and may specifically include common control information and user-specific information. The common control information includes scheduling information of system information, scheduling information of paging (paging) information, and the like. The user-specific information includes a downlink resource allocation indication, an uplink grant (uplink grant, UL grant), an uplink power control parameter, uplink retransmission information, and the like. Based on the foregoing purposes, a plurality of downlink control information (downlink control information, DCI) formats are designed. Different DCI formats may be used to indicate different control information, for example, DCI used to schedule data (including uplink data of the terminal device and downlink data of the terminal device), DCI used to indicate a slot format, and DCI used to indicate interrupted transmission (interrupted transmission). The downlink control information DCI is carried on a physical downlink control channel PDCCH.

Idle state (IDLE state): After a terminal device camps on a cell, the terminal device may enter an "idle state" or an "IDLE state". A radio resource control (radio resource control, RRC) connection of the terminal device in the idle state is not established. Therefore, the terminal device may be referred to as a terminal device in the RRC idle state.

Connected state (CONNECTED state): If the terminal device subsequently completes a random access procedure and establishes an RRC connection to a network (network device), the terminal device may enter a "connected state" or a "CONNECTED state", and the RRC connection of the terminal device in the connected state is established. Therefore, the terminal device may be referred to as a terminal device in the RRC connected state.

A discontinuous reception (discontinuous reception, DRX) mechanism is defined at a physical layer media access control (media access control, MAC), and is mainly introduced to reduce power consumption of a terminal device. Specifically, the DRX mechanism may enable the terminal device to enter a sleep state at some times (which may be defined as a sleep time or an inactive time (inactive time)), and not monitor or receive a PDCCH, but be woken up (woken up) from the sleep state to enter an active state when monitoring is required (which may be defined as an active time (active time)). The terminal device in active state needs to monitor and receive a PDCCH. In this way, the terminal device does not need to monitor a PDCCH all the time, to reduce power consumption of the terminal device.

For example, for NR, within a sleep time of a connected DRX (connected DRX, C-DRX) mechanism, the terminal device may choose, based on an implementation, to disable communications components such as a radio frequency transceiver (or a receiver) and a baseband processor to reduce power consumption. Alternatively, although a radio frequency component is enabled, the radio frequency component performs only some monitoring and detection processes with relatively low power consumption, for example, monitors some messages that the terminal device needs to monitor, such as a paging message, a broadcast message, and a system message. The terminal device in the sleep state does not need to monitor DCI scrambled by using a cell radio network temporary identity (cell radio network temporary identity, C-RNTI), a configured scheduling radio network temporary identity (configured scheduling RNTI, CS-RNTI), an interruption RNTI (interruption RNTI, INT-RNTI), a slot format indicator RNTI (slot format indicator-RNTI, SFI-RNTI), a semi-persistent channel state information RNTI (semi-persistent channel state information RNTI, SP-CSI-RNTI), a physical uplink control channel (physical uplink control channel, PUCCH) transmit power control RNTI (transmit power control PUCCH RNTI, TPC-PUCCH-RNTI), a physical uplink shared channel (physical uplink shared channel, PUSCH) transmit power control RNTI (transmit power control PUSCH RNTI, TPC-PUSCH-RNTI), and a sounding reference signal (sounding reference signal, SRS) transmit power control RNTI (transmit power control RNTI, TPC-SRS-RNTI), but the DCI scrambled by using these RNTIs needs to be monitored in the active time. For an NR system, sending of DCI scrambled by using a system message RNTI (system information RNTI, SI-RNTI), a paging RNTI (paging RNTI, P-RNTI), a random access RNTI (random access RNTI, RA-RNTI), and a temporary cell radio network temporary identity (temporary cell radio network temporary identity, TC-RNTI) is not affected by the C-DRX mechanism.

It should be noted that the terminal device in the sleep time does not receive one type of DCI on a PDCCH, for example, DCI used to schedule new transmission (new transmission) data, but may receive other DCI on the PDCCH that is not affected by whether the terminal device is in the active time, and receive data from another physical channel, for example, a physical downlink shared channel (physical downlink shared channel, PDSCH), an acknowledgment (acknowledgment, ACK) message, or a negative-acknowledgment (negative-acknowledgment, NACK). For ease of description, in embodiments of this application, that the terminal device receives (or does not receive) DCI may be understood as: The terminal device receives (or does not receive) a specific type of DCI, or that the terminal device monitors (or does not monitor) a PDCCH may be understood as: The terminal device monitors (or does not monitor) a PDCCH carrying a specific type of DCI.

Based on a state of the terminal device, if the DRX mechanism is configured, the DRX mechanism may be classified into idle-DRX (idle-DRX) and connected-DRX (connected-DRX, C-DRX). In embodiments of this application, the connected-DXR mechanism is mainly described, and a PDCCH or DCI that is not affected by the DRX mechanism is not described in this application. For ease of description, the DRX mechanism in embodiments of this application may be understood as the connected-DRX mechanism.

A discontinuous reception cycle (discontinuous reception cycle, DRX cycle) is also referred to as a DRX cycle, and is a basic time unit in a DRX state. States of a terminal device in the DRX cycle include a sleep state and an active state. The following provides a description with reference to the accompanying drawings, and details are not described herein. A network device may configure a DRX cycle for the terminal device in an RRC connected state. The DRX cycle may be a long DRX cycle (a long DRX cycle for short), or may be a short DRX cycle (a short DRX cycle for short). Alternatively, the network device may configure two DRX cycles for the terminal device, for example, a long DRX cycle and a short DRX cycle. In other words, the network device may configure at least one of a long DRX cycle and a short DRX cycle for the terminal device. For example, the long DRX cycle may be mandatory by default, and the short DRX cycle may be optional. The terminal device may switch from the short DRX cycle to the long DRX cycle. It should be understood that the short DRX cycle and the long DRX cycle are relative. When the network device can configure a maximum of two types of DRX cycles for the terminal device, a DRX cycle with a longer cycle may be referred to as a long DRX cycle, and a DRX cycle with a shorter cycle may be referred to as a short DRX cycle. In some other embodiments, the network device can also configure at least three types of DRX cycles for the terminal device based on an actual requirement. In this way, the at least three types of DRX cycles have different cycle lengths. For example, based on the long DRX cycle and the short DRX cycle, the network device may further configure a DRX cycle with another cycle for the terminal device. This is not specifically limited in embodiments of this application. It should be further understood that when the network device configures one type of DRX cycle for the terminal device, because there is only one type of DRX cycle, regardless of whether the network device configures a long DRX cycle, a short DRX cycle, or a DRX cycle with another cycle for the terminal device, the DRX cycle is collectively referred to as a DRX cycle in embodiments of this application.

Carrier aggregation (component aggregation, CA): Two or more component carriers (component carrier, CC) are aggregated to support a larger transmission bandwidth. For example, when a maximum bandwidth of each component carrier is 20 MHz, a maximum transmission bandwidth of 100 MHz can be implemented after carrier aggregation. This effectively improves an uplink and downlink transmission rates. A terminal device may determine, based on a capability of the terminal device, a maximum quantity of component carriers that can be simultaneously used for uplink or downlink transmission. In this application, the "component carrier" may be referred to as a "carrier" for short.

In carrier aggregation, a plurality of component carriers include one primary component carrier (primary component carrier, PCC), that is, a primary carrier, and one or more secondary component carriers (secondary component carrier, SCC), that is, secondary carriers. After the terminal device accesses a network, the terminal device keeps communication on the primary carrier of a network device such as a base station, and the network device may add one or more secondary carriers based on a service status.

Each component carrier corresponds to an independent cell (cell). In a carrier aggregation scenario, there are the following types of cells:

Primary cell (primary cell, PCell): The primary cell is a cell that works on a primary carrier. A terminal device performs an initial connection establishment process or starts a connection re-establishment process in the cell, or the cell is indicated as the primary cell in a handover process. After the terminal device is handed over from an original network device to a target network device, a primary carrier of the terminal device under the target network device may be the same as or different from a primary carrier under the original network device.

Secondary cell (secondary cell, SCell): The secondary cell is a cell that works on a secondary carrier. Once a radio resource control (radio resource control, RRC) connection is established, the secondary cell may be configured to provide an additional radio resource. The PCell and the SCell are user-level concepts for CA users. A carrier initially accessed by a user is a PCell of the CA user.

Serving cell (serving cell) set: If CA is not configured for a terminal device in radio resource control connected state, there is only one serving cell, namely, a PCell. If CA is configured for a terminal device in radio resource control connected state, a serving cell set includes a PCell and all SCells. A serving cell may indicate a primary cell PCell, or may indicate a secondary cell SCell.

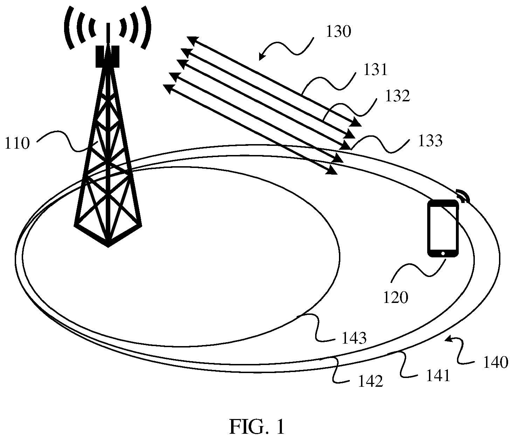

FIG. 1 is a schematic diagram of an application scenario according to an embodiment of this application. As shown in FIG. 1, the application scenario may include a network device 110 and a terminal device 120.

The network device 110 may be a device configured to communicate with the terminal device 120. For example, the network device 110 may be a base station configured to enable the terminal device 120 to access a radio access network (radio access network, RAN). The base station may sometimes be referred to as an access network device or an access network node. It may be understood that in systems using different radio access technologies, names of devices having functions of the base station may be different. For ease of description, in embodiments of this application, apparatuses that provide a wireless communication and access function for the terminal device are collectively referred to as a base station. For example, the network device 110 may be an evolved NodeB (evolved NodeB, eNB) in long term evolution (long term evolution, LTE), a next generation node base station (next generation node base station, gNB) in a fifth generation mobile communications (the fifth generation, 5G) system, a transmission and reception point (transmission and reception point, TRP), or a network device in a future 6G network. The network device 110 may be in a plurality of forms, such as a macro base station, a micro base station, a relay node, and an access point. Coverage of one network device 110 may include one cell, or may include a plurality of cells. In embodiments of this application, an apparatus configured to implement a function of the network device may be a network device, or may be an apparatus that can support the network device in implementing the function, for example, a chip system. In the technical solution of embodiments of this application, an example in which the apparatus for implementing the function of the network device is a network device and the network device is a base station is used to describe the technical solution provided in embodiments of this application.

The terminal device 120 may communicate with one or more core networks (core network, CN) through an access network device. The terminal device 120 may be a device having a wireless transceiver function, and may be deployed on land, including an indoor device, an outdoor device, a handheld device, a wearable device, or a vehicle-mounted device; may be deployed on a water surface (for example, on a ship); or may be deployed in the air (for example, on a plane, a balloon, and a satellite). The terminal device 120 may also be referred to as user equipment (User Equipment, UE), an access terminal, a terminal, a subscriber unit, a subscriber station, a mobile station, a remote station, a remote terminal, a mobile device, a user terminal, a wireless network device, a user agent, or a user apparatus. The terminal device 120 may be a cellular phone (cellular phone), a cordless phone, a session initiation protocol (session initiation protocol, SIP) phone, a smartphone (smartphone), a wireless local loop (wireless local loop, WLL) station, a personal digital assistant (personal digital assistant, PDA), a handheld device having a wireless communication function, a computing device, another device connected to a wireless modem, a vehicle-mounted device, a wearable device, an unmanned aerial vehicle, a terminal in the internet of things or the internet of vehicles, any form of terminal in a future network, relay user equipment, a terminal in a future evolved public land mobile network (public land mobile network, PLMN), or the like. This is not limited in embodiments of this application. For example, the terminal device 120 may be a virtual reality (virtual reality, VR) terminal device, an augmented reality (augmented reality, AR) terminal device, a terminal device in industrial control, a terminal device in self-driving, a terminal device in telemedicine, a terminal device in a smart grid, a terminal device in a smart city (smart city), or a terminal device in a smart home (smart home). In embodiments of this application, an apparatus configured to implement a function of the terminal device may be a terminal device, or may be an apparatus that can support the terminal device in implementing the function, for example, a chip system. The chip system may include a chip, or may include a chip and another discrete component. In the technical solution of embodiments of this application, an example in which the apparatus for implementing the function of the terminal device is a terminal device and the terminal device is UE is used to describe the technical solution provided in embodiments of this application.

The network device 110 and the terminal device 120 may perform uplink and downlink signal transmission through a transmission link between the network device 110 and the terminal device 120. A transmission link from the network device 110 to the terminal device 120 may be referred to as a downlink (downlink), and a transmission link from the terminal device 120 to the network device 110 may be referred to as an uplink (uplink). As shown in FIG. 1, uplink and downlink transmission may be performed between the network device 110 and the terminal device 120 through a carrier 130.

The terminal device 120 that supports carrier aggregation may transmit a signal in the following two manners.

In one manner, the terminal device 120 does not enable a carrier aggregation function, and the terminal device 120 can access only a carrier, and perform communication on the carrier. A transmission rate of the terminal device 120 is limited by a single-carrier bandwidth. For example, the terminal device 120 may access a carrier 131, a carrier 132, or another single carrier shown in FIG. 1, and then transmit data on the accessed single carrier.

In the other manner, the terminal device 120 enables a carrier aggregation function, and the terminal device 120 may simultaneously access two or more carriers, and simultaneously perform communication on the two or more carriers. Therefore, a data transmission rate can be greatly increased. For example, the terminal device 120 may simultaneously access the carriers 131 and 132 shown in FIG. 1, or simultaneously access carriers 131, 132, and 133 shown in FIG. 1, and then may simultaneously transmit data through resources on a plurality of carriers accessed by the terminal device 120, to maximize resource utilization.

A serving cell 140 of the terminal device 120 may include a plurality of cells. One cell is a primary cell, other cells are secondary cells, and each cell corresponds to one component carrier. For example, as shown in FIG. 1, the serving cell 140 includes a cell 141, a cell 142, and a cell 143, which may respectively correspond to the carrier 131, the carrier 132, and the carrier 133. It should be noted that the foregoing descriptions of the serving cell, the primary cell, and the secondary cell of the terminal device 120 are merely used as examples. During specific implementation, the serving cell may alternatively include more or fewer cells, and positions and coverage of cells corresponding to component carriers may alternatively be different. This is not limited in this application. A quantity of component carriers aggregated by the terminal device is not limited in this application either.

To make more efficient use of fragmented carrier spectrums, carrier aggregation supports aggregation of different carriers. For example, a plurality of carriers in a same band may be aggregated, so that a user can transmit data on the plurality of carriers in the same band. Carrier aggregation in the same band may be further classified into contiguous carrier aggregation and non-contiguous carrier aggregation. For another example, a plurality of carriers in different bands may be aggregated, so that a user can transmit data on the plurality of carries in the different bands. For another example, a plurality of carriers with a same bandwidth or different bandwidths may be aggregated. In an example of a 5G communications system, a 5G spectrum may be divided into two frequency ranges (frequency range, FR): FR1 and FR2. FR1 is a band below 6 GHz (sub-6G), for example, a frequency range from 450 MHz to 6 GHz. FR2 is a millimeter wave (millimeter wave, mmW) band, for example, a frequency range from 24 GHz to 52 GHz. Therefore, in 5G, the terminal device may aggregate a plurality of carriers in FR1, may aggregate a plurality of carriers in FR2, or may aggregate at least one carrier in FR1 and at least one carrier in FR2.

In embodiments of this application, each carrier aggregated by the terminal device is referred to as a component carrier (component carrier, CC), or may be referred to as a carrier for short in some embodiments. A terminal device for which carrier aggregation is configured is referred to as a carrier aggregation terminal device, and may also be referred to as a CA terminal device or a CA user in another embodiment. It should be understood that the application scenario according to this embodiment of this application is a scenario in which the terminal device performs carrier aggregation.

When data needs to be transmitted between the network device 110 and the terminal device 120, the terminal device 120 monitors a physical downlink control channel PDCCH sent over the downlink, and transmits and receives data based on an indication message sent by the network device 110. The terminal device 120 does not always perform an upload or a download service, and the terminal device 120 does not exchange data with the network device 110 for most of the time. Therefore, if the terminal device 120 continuously monitors a PDCCH in this case, it is clearly that power consumption is very high. Therefore, on the premise that data can be effectively transmitted, a discontinuous reception (discontinuous reception, DRX) cycle may be configured for a terminal device in a connected state, so that the terminal device enables a receiver (for example, an antenna) to enter an active state to monitor the PDCCH only within a necessary time period, and disables the receiver to enter a sleep state within a remaining time period and does not monitor the PDCCH.

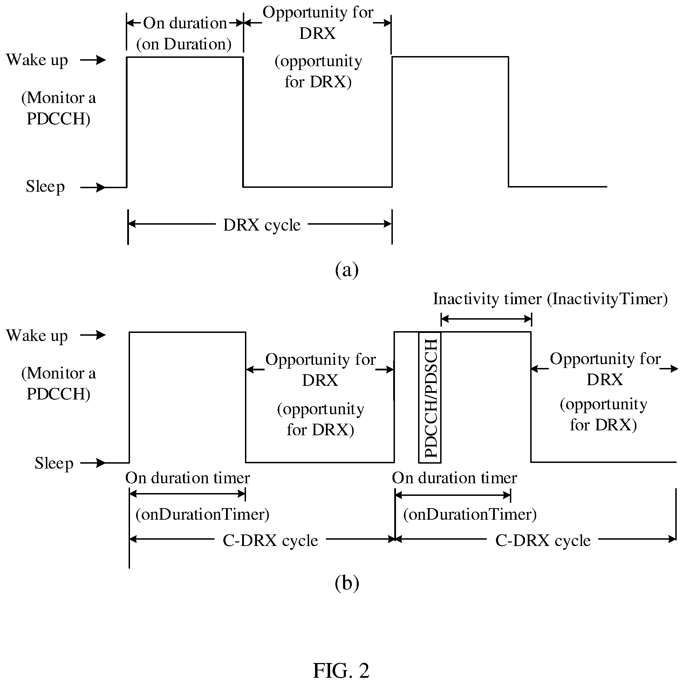

FIG. 2 is a schematic diagram of a state of a terminal device in a DRX mechanism.

As shown in (a) in FIG. 2, a DRX cycle includes an on duration (on duration or on Duration) part and an opportunity for DRX (opportunity for DRX) part. The terminal device needs to be woken up and monitor a PDCCH within the "on Duration" time period, and the terminal device is in an active state within this time period. The terminal device may not monitor or receive a PDCCH within the "opportunity for DRX" time period, to reduce power consumption. The terminal device is in a sleep state within this time period.

A DRX mechanism in an RRC connected state is a working manner in which a timer is combined with a DRX cycle. As shown in (b) in FIG. 2, at the start of each DRX cycle, that is, at the start of on Duration of each DRX cycle, the terminal device needs to start an on duration timer (on duration timer, onDurationTimer), and monitors and receives a PDCCH within a running time period of the onDurationTimer (that is, a working time period of the onDurationTimer). If a PDCCH sent to the terminal device is not detected within the running time period of the onDurationTimer, when the onDurationTimer expires (refer to the first C-DRX cycle shown in (b) in FIG. 2), it indicates that the "on Duration" time period ends. In this case, the terminal device enters the "opportunity for DRX" time period, and the terminal device is in the sleep state. The DRX cycle includes the on duration, and the terminal device needs to continuously monitor a PDCCH within this time period. The on duration timer onDurationTimer is a timer used to monitor an on duration time period. The onDurationTimer is started at the start of each DRX cycle. If a timing duration of the onDurationTimer exceeds a preset value, the on duration ends, and the terminal device enters the sleep time.

If the terminal device receives, within the running time period of the onDurationTimer, a PDCCH that indicates new transmission (new transmission) and that is sent to the terminal device (refer to the second C-DRX cycle shown in (b) in FIG. 2), the terminal device may continue to be scheduled by the network device within a next time period. Therefore, the terminal device needs to start an inactivity timer (inactivity timer, InactivityTimer), and the terminal device needs to monitor and receive a PDCCH within a running time period of the InactivityTimer. Then, if the terminal device does not receive, within the running time periods of the onDurationTimer and the InactivityTimer, a PDCCH sent to the terminal device and the InactivityTimer expires, the terminal device enters the "opportunity for DRX" time period again. If the terminal device receives, within the running time periods of the onDurationTimer and the InactivityTimer, a PDCCH sent to the terminal device to schedule new data transmission, the terminal device restarts the InactivityTimer, and continues to monitor a PDCCH. When the terminal device does not receive a PDCCH sent to the terminal device and the InactivityTimer expires, the terminal device enters the "opportunity for DRX" time period again. After a time period, the current DRX cycle ends, and the terminal device enters a next DRX cycle. When receiving DCI sent to the terminal device, the terminal device needs to continuously monitor PDCCH within a next time period. The inactivity timer InactivityTimer is a timer used to monitor a time period within which the terminal device needs to continuously monitor a PDCCH after the terminal device receives the DCI. The InactivityTimer is started or restarted when the DCI is received, and if a timing duration of the InactivityTimer exceeds a preset value, the terminal device stops monitoring the PDCCH, and enters sleep time.

The starting or restarting of the InactivityTimer is intended for scheduling new transmission data of the terminal device. In some embodiments, the network device may schedule retransmission of the terminal device. Therefore, the DRX mechanism further includes a retransmission timer (retransmission timer, RetransmissionTimer), and the terminal device needs to monitor and receive a PDCCH within a running time period of the RetransmissionTimer. The RetransmissionTimer may be specifically classified into an uplink retransmission timer (uplink retransmission timer, RetransmissionTimerUL) and an uplink retransmission timer (downlink retransmission timer, RetransmissionTimerDL). It should be understood that, in embodiments of this application, the terminal device starts a timer (for example, one or more of the onDurationTimer, the InactivityTimer, or the RetransmissionTimer). Within a running time period of the timer (for example, one or more of the onDurationTimer, the InactivityTimer, or the RetransmissionTimer), the network device considers that the terminal device enters an active time, and the terminal device is in the active state within the active time. In other words, the terminal device needs to monitor a PDCCH. In other words, the terminal device starts the timer, and the running time period of the timer may be considered as the active time of the terminal device. The terminal device is in the active state within the active time. In this way, the terminal device needs to monitor a PDCCH in the active state, and it may also be understood that the terminal device needs to monitor a PDCCH within the active time. Correspondingly, a time period within which the terminal device does not start a timer is a non-running time period of the timer. The non-running time period of the timer may be considered as the sleep time of the terminal device, and the terminal device is in the sleep state within the sleep time. In this way, that the terminal device does not need to monitor a PDCCH in the sleep state may also be understood as: The terminal device does not need to monitor a PDCCH within the sleep time.

The network device may configure a long DRX cycle for the terminal device. Optionally, the network device may alternatively configure a short DRX cycle for the terminal device. The terminal device starts a short cycle timer (short cycle timer, ShortCycleTimer) when using the short DRX cycle. A unit of the ShortCycleTimer is a quantity of short DRX cycles, and the ShortCycleTimer is used to control a duration of using the short DRX cycle. For example, when the ShortCycleTimer expires, the short DRX cycle is implicitly switched to the long DRX cycle. Certainly, in some other embodiments, the network device may alternatively configure a DRX cycle with another duration for the terminal device. Correspondingly, the terminal device may include a timer used to control the DRX cycle with another duration. This is not limited in embodiments of this application.

Therefore, it can be learned from the foregoing that the terminal device for which the DRX cycle is configured needs to monitor and receive a PDCCH in a running process (or referred to as a running time period) of timers such as the onDurationTimer, the InactivityTimer, the RetransmissionTimerUL, or the RetransmissionTimerDL. The time period may be referred to as a DRX "active time" (active time). Within the active time, the terminal device needs to be woken up to prepare to receive signaling and data. In other words, the active time is a time period within which the terminal device continuously monitors a PDCCH, and may specifically include, for example, the running time period (namely, an on duration) of the onDurationTimer, the running time period (namely, an inactive time) of the InactivityTimer, and the running time period (namely, a retransmission time) of the RetransmissionTimer. In other words, various timers configured in the DRX mechanism may be used to control a duration in which the terminal device is in the active state within a time period.

However, the terminal device may enter the sleep state and does not monitor or receive a PDCCH within a non-running time period of the timers, and the time period may be referred to as a DRX sleep time. Power consumption of the terminal device within the DRX "active time" is higher than power consumption of the terminal device within the DRX "sleep time". The terminal device does not monitor a PDCCH or transmit data within the sleep time, to reduce power consumption. Within the sleep time, the terminal device may choose, based on an implementation, to disable a radio frequency transceiver and disable a baseband processing chip and a memory, or retain only a crystal oscillator clock or the like. It should be understood that, in some functions out of the DRX mechanism, it may be specified that the terminal device needs to be in the "active time" or the "sleep time" in some cases. These function restrictions do not conflict with the DRX mechanism. Instead, a union of the function restrictions and the DRX mechanism is used. Therefore, whether the terminal device is actually in the "active time" or the "sleep time" further needs to be determined based on all functions of the terminal device.

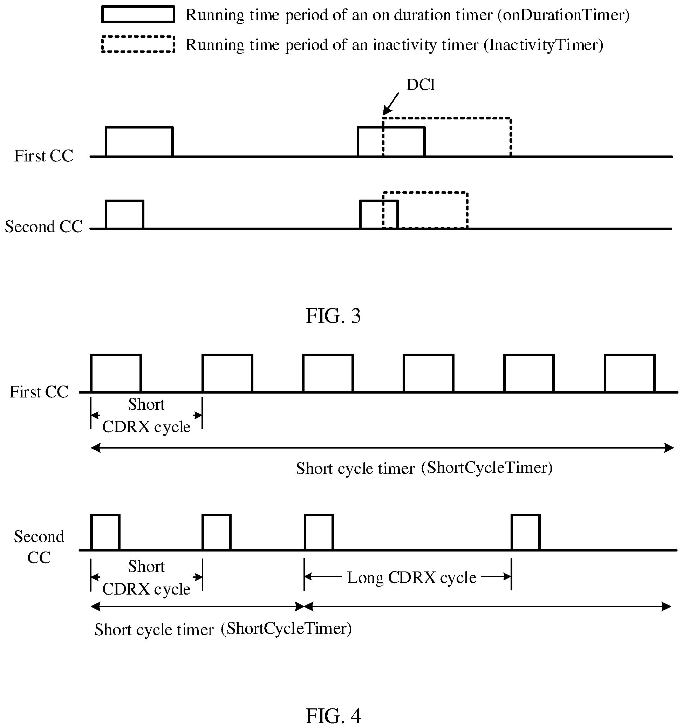

In a carrier aggregation scenario, a DRX cycle may be configured for all aggregated carriers of the terminal device, and durations of DRX timers corresponding to component carriers may be the same or may be different. For example, onDurationTimer values configured for the component carriers may be the same or may be different, InactivityTimer values configured for the component carrier may be the same or may be different, and ShortCycleTimer values configured for the component carriers may be the same or may be different. In an example of the 5G communications system, usually, values of corresponding timers configured for carriers in the FR1 band are the same. For example, same onDurationTimer values, same InactivityTimer values, and same ShortCycleTimer values are configured for the carriers in the FR1 band. Values of timers corresponding to carriers in the FR2 band are the same. For example, same onDurationTimer values, same InactivityTimer values, and same ShortCycleTimer values are configured for the carriers in the FR2 band. However, values of timers corresponding to a carrier in the FR1 band and a carrier in the FR2 band may be different. For example, if a first carrier aggregated by the terminal device belongs to the band FR1, and a second carrier aggregated by the terminal device belongs to the FR2 carrier, onDurationTimer values configured for the first carrier and the second carrier are different, or InactivityTimer values configured for the first carrier and the second carrier are different, or ShortCycleTimer values configured for the first carrier and the second carrier are different, or values of the foregoing timers are all different. The following provides detailed descriptions with reference to FIG. 3 and FIG. 4. It should be understood that the value of the timer may be understood as a running time period of the timer.

FIG. 3 and FIG. 4 are schematic diagrams of DRX cycle configuration of component carriers in a carrier aggregation scenario. For ease of understanding, FIG. 3 and FIG. 4 show two component carriers as examples. The two component carriers are a first component carrier (namely, a first CC, which may also be referred to as a first carrier) and a second component carrier (namely, a second CC, which may also be referred to as a second carrier). Duration configuration of timers on the component carriers is shown as an example. In the figure, only an example in which an onDurationTimer and an InactivityTimer are configured on the carriers is used. In another embodiment of this application, another type of timer may be configured on the carriers. This is not limited in embodiments of this application.

Refer to FIG. 3. For example, on duration timers (onDurationTimer) and inactivity timers (InactivityTimer) are configured on the first CC and the second CC. A solid block represents a running time period of the onDurationTimer, and a dashed block represents a running time period of the InactivityTimer. As can be seen from the figure, onDurationTimer values configured on the first CC and the second CC are different, and the onDurationTimer value corresponding to the first CC is greater than the onDurationTimer value corresponding to the second CC. InactivityTimer values configured on the first CC and the second CC are different, and the InactivityTimer value corresponding to the first CC is greater than the InactivityTimer value corresponding to the second CC. In some other embodiments, the onDurationTimer value corresponding to the first CC is greater than the onDurationTimer value corresponding to the second CC, as shown in the figure, and the InactivityTimer value corresponding to the first CC may be less than or equal to the InactivityTimer value corresponding to the second CC. This is not limited in embodiments of this application. It should be understood that the onDurationTimer value is a running time period or a timing duration of the onDurationTimer, and the InactivityTimer value is a running time period or a timing duration of the InactivityTimer.

Refer to FIG. 4. For example, on duration timers (onDurationTimer) and short cycle timers (ShortCycleTimer) are configured on the first CC and the second CC. A solid block represents a running time period of the onDurationTimer. As can be seen from the figure, onDurationTimer values configured on the first CC and the second CC are different, and the onDurationTimer value corresponding to the first CC is greater than the onDurationTimer value corresponding to the second CC. ShortCycleTimer values configured on the first CC and the second CC are different, and the ShortCycleTimer value corresponding to the first CC is greater than the ShortCycleTimer value corresponding to the second CC. As shown in the figure, the ShortCycleTimer value configured on the first CC is greater than or equal to six short CDRX cycles, and the ShortCycleTimer value configured on the second CC is two short CDRX cycles. After the ShortCycleTimer expires, a short CDRX cycle of the terminal device is switched to a long CDRX cycle on the second CC. In this way, when active-state power consumption of the terminal device on the second CC is higher than active-state power consumption of the terminal device on the first CC, the ShortCycleTimer value is shortened, so that the terminal device can be in the sleep state on the second CC for more time, to reduce power consumption of the terminal device on the second CC. Because the terminal device aggregates the first CC and the second CC for communication, to ensure communication quality and facilitate management, in embodiments of this application, duration values of short DRX cycles configured on the first CC and the second CC may be the same, but corresponding short cycle timer values are different.

It should be understood that a DRX cycle is configured for the terminal device in embodiments of this application, and carriers that can be aggregated by the terminal device are not limited to two component carriers, and may further be three, four, or more component carriers. This is not limited in embodiments of this application. In a plurality of component carriers aggregated by the terminal device, running durations of at least one corresponding timer in timers configured on the at least two component carriers are different. For ease of understanding, only the on duration timer, the inactivity timer, and the short cycle timer are used as examples for description in embodiments of this application.

In the carrier aggregation scenario, if a DRX cycle is configured for all component carriers aggregated by the terminal device, corresponding timers configured on the component carriers are started in a same time position. For example, on duration timers (onDurationTimer) configured on the component carriers are started in a same time position, and inactivity timers (InactivityTimer) configured on the component carriers are started in a same time position. In this way, if running durations of the timers configured on the component carriers are also the same, states of the terminal device on the component carriers are the same. For example, the terminal device is in the active state or the sleep state on all the component carriers. However, if running durations of the timers configured on the component carriers are not completely the same, for example, running durations of timers configured on some component carriers are longer than running durations of corresponding timers configured on other component carriers, the terminal device may be in the active state on some component carriers and in the sleep state on the other component carriers.

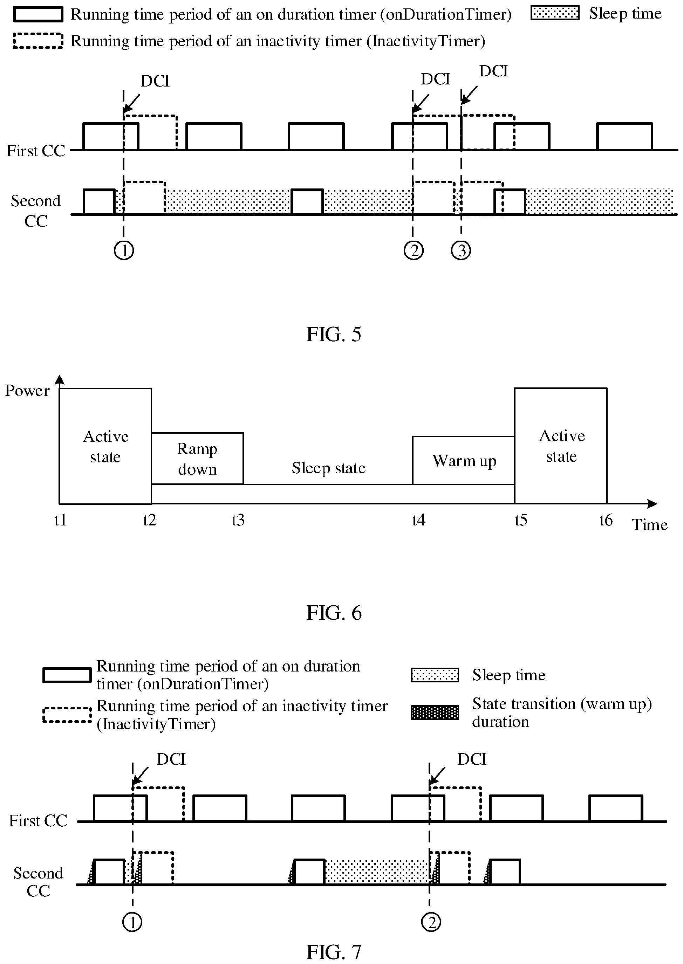

FIG. 5 is a schematic diagram of timer configuration within DRX cycles of component carriers in a carrier aggregation scenario. As shown in FIG. 5, an example in which an on duration timer (onDurationTimer) and an inactivity timer (InactivityTimer) are configured for each of the first CC and the second CC is used for description. The onDurationTimer corresponding to the first CC and the onDurationTimer corresponding to the second CC are started in a same time position, but have different running durations. The terminal device is in the active state during running of the onDurationTimer. The InactivityTimer corresponding to the first CC and the InactivityTimer corresponding to the second CC are started in a same time position, but have different running durations. The terminal device is in the active state during running of the InactivityTimer. The terminal device is in the sleep state within non-running time periods of the onDurationTimer and the InactivityTimer. The time period is a sleep time of the terminal device. Only an example of a sleep time of the terminal device on the second CC is marked in the figure. The terminal device in the active state may communicate with the network device, for example, receive a message sent by the network device, send a message to the network device, or transmit data to the network device. In other words, the network device can learn whether the terminal device starts a timer, when the terminal device starts the timer, and a running duration of the timer. Within a running time period of the timer, the network device considers that the terminal device enters the active time, that is, considers that the terminal device is in the active state. Therefore, the network device can schedule the terminal device. If the running duration of the onDurationTimer corresponding to the first CC is the same as the running duration of the onDurationTimer corresponding to the second CC, when the terminal device receives a first message such as DCI during running of the onDurationTimer corresponding to the first CC, the terminal device starts the InactivityTimer corresponding to the first CC and the InactivityTimer corresponding to the second CC. In this case, the terminal device is in the active state on both the first CC and the second CC. However, if the running duration of the onDurationTimer corresponding to the first CC is different from the running duration of the onDurationTimer corresponding to the second CC, as shown at a position ① and a position ② in FIG. 5, when the terminal device receives a first message such as DCI during running of the onDurationTimer corresponding to the first CC, the terminal device starts the InactivityTimer corresponding to the first CC and the InactivityTimer corresponding to the second CC. In this case, the terminal device is in the active state on the first CC, and may be in the sleep state on the second CC. Similarly, for the InactivityTimer, if the running duration of the InactivityTimer corresponding to the first CC is the same as the running duration of the InactivityTimer corresponding to the second CC, when the terminal device receives a first message such as DCI during running of the InactivityTimer corresponding to the first CC, the terminal device restarts the InactivityTimer corresponding to the first CC and the InactivityTimer corresponding to the second CC. In this case, the terminal device is in the active state on both the first CC and the second CC. However, if the running duration of the InactivityTimer corresponding to the first CC is different from the running duration of the InactivityTimer corresponding to the second CC, as shown at a position ③ in FIG. 5, when the terminal device receives a first message such as DCI during running of the InactivityTimer corresponding to the first CC, the terminal device restarts the InactivityTimer corresponding to the first CC and the InactivityTimer corresponding to the second CC. In this case, the terminal device is in the active state on the first CC, and may be in the sleep state on the second CC.

As described above, after a timer on the terminal device side is started or restarted, the network device considers that the terminal device enters the active time and is in the active state, and the network device side may schedule the terminal device. Generally, when the terminal device warms up from the sleep state or ramps down from the active state, the terminal device needs a specific time period for preparation to complete state transition. FIG. 6 is a schematic diagram of state transition of the terminal device. As shown in FIG. 6, the terminal device is in the active state within a time period from t1 to t2. When the terminal device ramps down from the active state, state transition needs to be performed within a time period from t2 to t3. To be specific, the terminal device ramps down (ramp down) within the time period from t2 to t3, for example, disables a radio frequency transceiver, disables a baseband processing chip, and disables a memory. After the ramp-down is completed, the terminal device is completely in the sleep state within a time period from t3 to t4, and the terminal device no longer monitors a PDCCH. When the terminal device warms up from the sleep state, state transition needs to be performed within a time period from t4 to t5. To be specific, the terminal device warms up (ramp up or warm up) within the time period from t4 to t5, for example, enables radio frequency or baseband hardware, and performs beam management (mainly for the FR2 band). After the warm-up is completed, the terminal device can monitor a PDCCH or transmit data within a time period from t5 to t6. In embodiments of this application, that the terminal device warms up from the sleep state may also be understood as: The terminal device is woken up from the sleep state, that is, a process from the sleep state to a state in which the terminal device starts to monitor a PDCCH.

To avoid affecting scheduling performed by the network device on the terminal device, the terminal device is usually woken up from the sleep state before a timer is started, that is, is woken up within a non-running time period of the timer. In this way, after the timer is started, the terminal device is in the active state within a running duration of the timer. That is, the terminal device can directly perform communication within the running duration of the timer. When carriers aggregated by the terminal device have same timer duration configuration, currently, a warm-up process of the terminal device usually exists only before an on duration timer (onDurationTimer) is started, and a start position of the onDurationTimer may be calculated by the terminal device in advance. In this way, the terminal device may warm up (warm up) in advance before the onDurationTimer is started. For example, the terminal device first performs time-frequency offset synchronization when receiving a downlink reference signal during warm-up, to prevent a deviation between a clock and a working frequency of a system and a clock and a frequency domain of the network device caused by long-time sleep of the terminal device. Alternatively, the terminal device may first attempt to receive a downlink synchronization signal and update a system message, to prevent a deviation of a system message after the terminal device moves from one cell to another cell.

When the carriers aggregated by the terminal device have different timer duration configurations, as shown in a position ① and a position ② in FIG. 7, when the terminal device receives a first message such as DCI during running of the onDurationTimer corresponding to the first CC, the terminal device starts the InactivityTimer corresponding to the first CC and the InactivityTimer corresponding to the second CC. However, in this case, the terminal device is in the sleep state on the second CC. After starting the InactivityTimer corresponding to the second CC, the terminal device needs to be first woken up from the sleep state within the running time period of the InactivityTimer. That is, the terminal device needs to first perform warm-up. In other words, the InactivityTimer is started based on whether the terminal device receives the first message such as the DCI. However, the terminal device receives the first message such as the DCI dynamically and unpredictably. Therefore, the terminal device cannot perform warm-up in advance before the InactivityTimer is started. In this way, within a time period after the InactivityTimer is just started, the terminal device cannot correctly receive the first message such as the DCI and cannot effectively send or receive data. However, in this case, the network device considers, based on starting of the timer on the terminal device side, that the terminal device is in the active state and can transmit a signal. If the network device schedules the terminal device in this case, a problem such as a data loss may occur.

It should be noted that, in FIG. 7 and the following accompanying drawings, only a warm-up time period and a partial sleep time period are marked on the second CC in the figures as examples. Similar to a state of the terminal device on the second CC, a warm-up time period of the terminal device on the first CC and a sleep time period of the terminal device on the first CC may be easily obtained according to the foregoing definitions, and are not marked in the figures for brevity.

It should be further noted that, for ease of understanding, when the DRX mechanism is described in embodiments of this application, for example, whether the terminal device monitors a PDCCH is used to describe a terminal behavior of the terminal device within the active time and the sleep time. However, it should be understood that whether the terminal device monitors a PDCCH actually means whether the terminal device monitors a preset type of PDCCH. Without loss of generality, the DCI carried on the preset type of PDCCH may include DCI scrambled by a C-RNTI, a CS-RNTI, an INT-RNTI, an SFI-RNTI, an SP-CSI-RNTI, a TPC-PUCCH-RNTI, a TPC-PUSCH-RNTI, and a TPC-SRS-RNTI. In addition, in addition to monitoring a preset type of PDCCH, there is another terminal behavior within the active time and the sleep time. For example, the terminal device may further send a periodic or semi-static sounding reference signal (Sounding Reference Signal, SRS), or report channel state information (Channel State Information, CSI) within the active time.

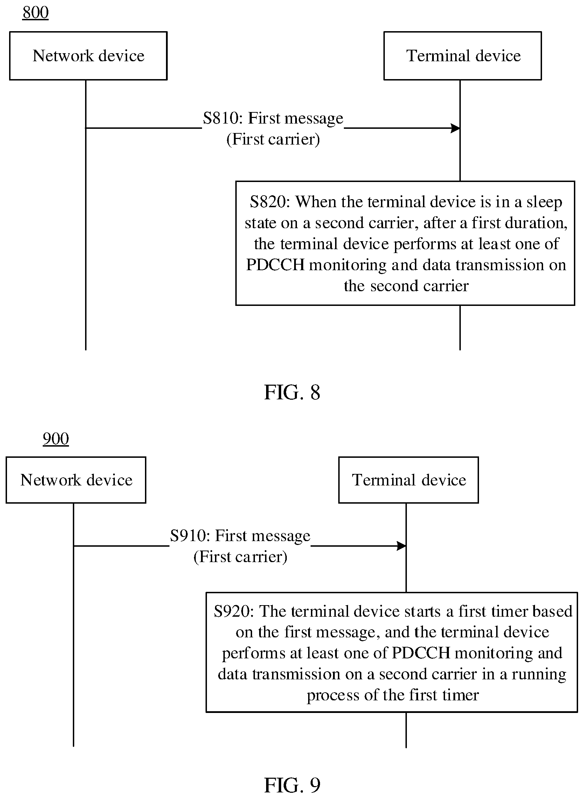

Therefore, embodiments of this application provide a wireless communication method, to improve communication quality of the terminal device in the carrier aggregation scenario. The following describes in detail embodiments of this application with reference to FIG. 8.

FIG. 8 is a schematic flowchart of a wireless communication method according to an embodiment of this application. The method shown in FIG. 8 may be performed by a terminal device. The terminal device may be, for example, the terminal device 120 shown in FIG. 1. The method 800 may include step S810 and step S820.

Step S810: The terminal device receives, on a first carrier, a first message sent by a network device.

Correspondingly, the network device sends the first message to the terminal device on the first carrier.

The first message indicates the terminal device to perform at least one of physical downlink control channel PDCCH monitoring and data transmission on a second carrier. That is, the first message indicates the terminal device to monitor a physical downlink control channel PDCCH and/or transmit data on the second carrier. In other words, the first message indicates the terminal device to monitor a physical downlink control channel PDCCH on the second carrier, or indicates to transmit data on the second carrier (for example, in a cross-carrier scheduling scenario), or indicates to monitor a PDCCH on the second carrier and then transmit data based on a received PDCCH, or indicates to monitor a PDCCH on the second carrier and transmit data based on the received first message. In conclusion, after the terminal device receives the first message on the first carrier, the first message indicates the terminal device to perform a specific behavior or action on the second carrier.

The first message may be added by the network device on a PDCCH and sent to the terminal device, or may be downlink control information DCI sent by the network device to the terminal device, or may be another message or a new message. This is not specifically limited in this embodiment of this application. When the first message is DCI, the DCI may be DCI for scheduling new transmission of the terminal device, or may be the DCI scrambled by using a C-RNTI, a CS-RNTI, an INT-RNTI, an SFI-RNTI, an SP-CSI-RNTI, a TPC-PUCCH-RNTI, a TPC-PUSCH-RNTI, and a TPC-SRS-RNTI described above. This is not limited in this embodiment of this application.

It should be understood that the terminal device can receive the first message on the first carrier. That is, the terminal device is in an active state on the first carrier, because the terminal device can transmit signaling and/or data only when the terminal device is in the active state.

Step S820: When the terminal device is in a sleep state on the second carrier, after a first duration, the terminal device performs at least one of PDCCH monitoring and data transmission on the second carrier.

Correspondingly, after the first duration, the network device may perform at least one of PDCCH sending and data transmission to the terminal device on the second carrier. It should be understood that the terminal device is a carrier aggregation terminal device, and the first carrier and the second carrier are carriers aggregated by the terminal device. When the terminal device is in the active state on the first carrier, the terminal device may be in the active state or the sleep state on the second carrier.

When the terminal device receives the first message on the first carrier, if the terminal device is in the active state on the second carrier, and the first message indicates the terminal device to perform at least one of PDCCH monitoring and data transmission on the second carrier, the terminal device may directly monitor a PDCCH and/or transmit data based on the indication of the first message.

When the terminal device receives the first message on the first carrier, if the terminal device is in the sleep state on the second carrier, and the first message indicates the terminal device to perform at least one of PDCCH monitoring and data transmission on the second carrier, because the terminal device is in the sleep state on the second carrier, and the terminal device can monitor a PDCCH and/or transmit data only in the active state, in this embodiment of this application, the terminal device monitors a PDCCH and/or transmits data on the second carrier after the first duration.

The first duration in this embodiment of this application is used to wake up the terminal device from the sleep state. In this embodiment of this application, "waking up the terminal device from the sleep state" may be understood as a process from the sleep state to a state in which the terminal device can monitor a PDCCH and/or transmit data. In other words, the terminal device is first woken up from the sleep state within the first duration. This process may also be referred to as the warm-up (warm-up) process described above. The terminal device cannot effectively transmit signaling and/or data in the warm-up process. In this embodiment of this application, the terminal device monitors a PDCCH and/or transmits data after the first duration. In other words, the terminal device may not monitor a PDCCH and/or transmit data within the first duration. Correspondingly, the network device may not send a PDCCH and/or schedule data within the first duration.

It should be understood that, in step S810, the first message indicates the terminal device to monitor a PDCCH and/or transmit data on the second carrier. However, in step S820, after the first duration, the network device may not send a PDCCH or data to the terminal device on the second carrier, and the terminal device may also be woken up from the sleep state, and then monitor a PDCCH or prepare to transmit data on the second carrier, but the terminal device may not monitor a PDCCH or may not transmit data.

In this way, in a process of waking up the terminal device from the sleep state, the terminal device may not monitor a PDCCH and/or transmit data, and the network device may not send a PDCCH and/or transmit data. This can avoid a case in which the terminal device cannot monitor a PDCCH sent by the network device to the terminal device or cannot receive data sent by the network device, and cannot effectively receive and send data, to improve communication quality of the terminal device om a carrier aggregation scenario.

It should be understood that an action performed by the terminal device after the first duration is consistent with an action that is performed by the terminal device on the second carrier and that is indicated by the first message. For example, if the first message indicates the terminal device to monitor a PDCCH on the second carrier, the terminal device monitors a PDCCH on the second carrier after the first duration in step S820. For another example, if the first message indicates the terminal device to transmit data on the second carrier, the terminal device transmits data on the second carrier after the first duration in step S820. That is, in step S820, the terminal device performs, on the second carrier, a behavior indicated by the first message.

It should be further understood that, that the terminal device is in the sleep state on the second carrier may be understood as: The terminal device is in a sleep state within a DRX cycle on the second carrier. Correspondingly, that the terminal device is in the active state on the first carrier may be understood as: The terminal device is in an active state within a DRX cycle on the first carrier. In this embodiment of this application, the terminal device configures DRX cycles on both the first carrier and the second carrier. When the terminal device is in the active state on the first carrier, the terminal device may be in the sleep state on the second carrier.

For example, a frequency range of the first carrier may be below 6 GHz, and/or a frequency range of the second carrier may be a millimeter-wave band.

It is described above that the terminal device monitors a PDCCH and/or transmits data on the second carrier after the first duration, and does not monitor a PDCCH and/or transmit data on the second carrier within the first duration.

There are a plurality of implementations in which the terminal device does not monitor a PDCCH and/or transmit data within the first duration.

In an example, the terminal device starts a first timer after the first duration, and the terminal device can perform at least one of PDCCH monitoring and data transmission on the second carrier in a running process of the first timer.

In other words, the terminal device can perform a specific behavior or action in the running process of the first timer, for example, monitor a PDCCH and/or transmit data. Correspondingly, the network device may determine, based on whether the terminal device is in the running process of the first timer, whether to send a PDCCH and/or transmit data to the terminal device.

In this way, after the first duration, the terminal device has been woken up from the sleep state. In this case, the terminal device starts the first timer, and the terminal device is already in the active state. The terminal device can monitor a PDCCH and/or transmit data in the running process of the first timer, and is woken up from the sleep state beyond the running process of the first timer. This avoids a case in which the terminal device cannot effectively transmit data in a warm-up process in the running process of the first timer, and can improve communication quality of the terminal device in the carrier aggregation scenario.

In another example, when receiving the first message, the terminal device starts the first timer. The terminal device can perform at least one of PDCCH monitoring and data transmission on the second carrier in the running process of the first timer. The terminal device does not monitor a PDCCH or transmit data on the second carrier within the first duration after the starting of the first timer.

When receiving the first message, the terminal device starts the first timer. The terminal device may perform a specific behavior on the second carrier in the running process of the first timer, for example, monitor a PDCCH and/or transmit data. Correspondingly, the network device may also perform a specific behavior in the running process of the first timer. Because the terminal device starts the first timer when receiving the first message, a running duration of the first timer includes a time period required to wake up the terminal device from the sleep state, and the terminal device cannot effectively transmit data within this time period. Therefore, in this embodiment of this application, although the terminal device starts the first timer when receiving the first message, the terminal device does not monitor a PDCCH or transmit data on the second carrier within the first duration after the starting of the first timer. In other words, after the first timer is started, the terminal device may not perform a specific behavior or action within the first duration, for example, monitor a PDCCH and/or transmit data. After the first duration, the terminal device has been woken up from the sleep state, and then the terminal device monitors the PDCCH and/or transmits data. Correspondingly, the network device does not send a PDCCH or transmit data to the terminal device within the first duration. In this embodiment of this application, behaviors of the network device and the terminal device within the first duration (that is, in a process of waking up the terminal device from the sleep state) are limited, so that the terminal device can be prevented from monitoring a PDCCH and/or transmitting data in the process of being woken up from the sleep state, and communication quality of the terminal device in the carrier aggregation scenario can be improved.

Optionally, the terminal device may further start a second timer after the first duration, and the terminal device can perform at least one of PDCCH monitoring and data transmission on the first carrier in a running process of the second timer.

The terminal device may start the first timer and the second timer in a plurality of implementations.

For example, after the first duration, the terminal device starts the first timer, and the terminal device may further start the second timer. The terminal device can monitor a PDCCH and/or transmit data on the second carrier in the running process of the first timer. The terminal device can monitor a PDCCH and/or transmit data on the first carrier in the running process of the second timer. To be specific, the terminal device simultaneously starts the first timer and the second timer after the first duration. In this way, the first timer and the second timer may be a same timer, for example, a MAC entity-level timer. It should be understood that the first timer and the second timer may also be a same timer.

For another example, when the terminal device receives the first message, the terminal device starts the first timer, and the terminal device may further start the second timer. In the running process of the second timer, the terminal device can monitor a PDCCH and/or transmit data on the first carrier. In the running process of the first timer, the terminal device monitors a PDCCH and/or transmits data on the second carrier after the first duration, and does not monitor a PDCCH and/or transmit data on the second carrier within the first duration. The terminal device may normally perform a corresponding behavior on the first carrier, and limit a behavior on the second carrier within the first duration. When receiving the first message, the terminal device simultaneously starts the first timer and the second timer. In this way, the first timer and the second timer may be a same timer, for example, a MAC entity-level timer. It should be understood that the first timer and the second timer may also be a same timer. It should be understood that, when the terminal device simultaneously starts the first timer and the second timer, the first timer and the second timer may alternatively be different timers. To be specific, the first timer is configured to perform timing on the second carrier, and the second timer is configured to perform timing on the first carrier.

For another example, when receiving the first message, the terminal device starts the second timer, and after the first duration, the terminal device starts the first timer. The terminal device can monitor a PDCCH and/or transmit data on the second carrier in the running process of the first timer. The terminal device can monitor a PDCCH and/or transmit data on the first carrier in the running process of the second timer. The terminal device starts the first timer and the second timer at different times. In this way, the first timer and the second timer may be timers of different levels. For example, the first timer is a second carrier-level timer, and is configured to perform timing on the second carrier, and the second timer is a first carrier-level timer, and is configured to perform timing on the first carrier.

For another example, when receiving the first message, the terminal device starts the first timer, and after the first duration, the terminal device starts the second timer. In the running process of the first timer, the terminal device monitors a PDCCH and/or transmits data on the second carrier after the first duration, and does not monitor a PDCCH and/or transmit data on the second carrier within the first duration. The terminal device can monitor a PDCCH and/or transmit data on the first carrier in the running process of the second timer. That is, the terminal device normally performs corresponding behaviors on the first carrier and the second carrier after the first duration, but the behaviors of the terminal device on the second carrier within the first duration are limited. The terminal device starts the first timer and the second timer at different times. In this way, the first timer and the second timer may be timers of different levels.

Optionally, the first timer and the second timer may be InactivityTimers.

The first duration in this embodiment of this application is used to wake up the terminal device from the sleep state on the second carrier. Optionally, the first duration is longer than or equal to a state transition duration, and the state transition duration is a time period required to wake up the terminal device from the sleep state. Waking up the terminal device from the sleep state may be understood as a process from the sleep state to a state in which the terminal device can effectively perform a specific action or behavior, for example, monitor a PDCCH and/or transmit data. Specifically, when the first message indicates the terminal device to monitor a PDCCH on the second carrier, a process of waking up the terminal device from the sleep state may be understood as a process from the sleep state to a state in which the terminal device can effectively monitor a PDCCH. When the first message indicates the terminal device to transmit data on the second carrier, a process of waking up the terminal device from the sleep state may be understood as a process from the sleep state to a state in which the terminal device can effectively transmit data. In this embodiment of this application, that the terminal device effectively monitors a PDCCH or effectively transmits data may be understood as: The terminal device has completed a warm-up process, and has enabled hardware, has completed a beam management process, or the like, and is ready to transmit signaling or data.

The first duration is longer than or equal to the state switching duration, so that it can be ensured that the terminal device is woken up from the sleep state on the second carrier, and then implements effective signaling or data transmission after the first duration. The first duration being used to wake up the terminal device from the sleep state may be understood as: The terminal device just wakes up from the sleep state before the first duration ends, or the terminal device completes a process of being woken up from the sleep state within the first duration, and is in a state in which a PDCCH can be effectively monitored or data can be effectively transmitted within a part of the first duration.

Optionally, when the first message indicates the terminal device to transmit data on the second carrier, a time interval between the data and the first message is longer than or equal to the first duration.

In other words, when the first message received by the terminal device on the first carrier indicates the terminal device to transmit data on the second carrier, the terminal device may implement cross-carrier scheduling by using the first carrier and the second carrier. In this case, a time interval between a position of the data transmitted by the terminal device on the second carrier and a position of the first message (for example, DCI) received by the terminal device on the first carrier should be longer than the first duration. This can ensure that the terminal device completes the process of being woken up from the sleep state within the first duration, and can correctly transmit data after the first duration, to improve communication quality in cross-carrier scheduling.

Optionally, in this embodiment of this application, the first duration may correspond to a sleep level of the terminal device on the second carrier. In other words, at least one sleep level may be configured for the terminal device, and the terminal device may select the corresponding first duration based on the sleep level of the terminal device on the second carrier.

Similar to a deep sleep state and a light sleep state of a person, at least one sleep level may also be configured for the terminal device. At different sleep levels, sleep states of the terminal device are different, sleep degrees are different, and power consumption is also different. For example, when the terminal device is in deep sleep, the terminal device may disable all communications components such as a radio frequency transceiver and a baseband processor, and perform only necessary communication with extremely low power consumption. When the terminal device is in light sleep, the terminal device may disable only communications components with relatively high power consumption, and can complete more communication than that in deep sleep. Alternatively, for another example, when the terminal device is in deep sleep, the terminal device may sleep for a long time and then be woken up, and when the terminal device is in light sleep, the terminal device may sleep for a while and then be woken up. Usually, a deeper sleep degree of the terminal device indicates a longer sleep time of the terminal device and less work that needs to be performed during sleep. In this way, power consumption of the terminal device can be further reduced.

Specifically, for example, one sleep level is configured for the terminal device, and time periods required to wake up the terminal device from the sleep state are approximately the same. Correspondingly, the network device may configure duration, namely, the first duration, for the terminal device. In this way, after the first duration, the terminal device may complete a process of being woken up from the sleep state.

For another example, at least two sleep levels are configured for the terminal device, and time periods required to wake up the terminal device from the sleep state may be different at different sleep levels. For example, two sleep levels: deep sleep and light sleep, may be configured for the terminal device. In this case, a time period required to wake up the terminal device from the sleep state when the terminal device is in a deep sleep state may be longer than a time period required to wake up the terminal device from the sleep state when the terminal device is in a light sleep state. Correspondingly, the network device may configure at least two durations for the terminal device, and each of the at least two sleep levels corresponds to one of the at least two durations. That is, the terminal device may determine, based on a current sleep level from the at least two durations configured by the network device, the first duration corresponding to the current sleep level. It should be understood that the current sleep level in this embodiment of this application may be understood as a sleep state of the terminal device on the second carrier when the terminal device receives the first message on the first carrier.

Optionally, at least one sleep level is configured for the terminal device. Before step S810, the method 800 further includes: The terminal device receives configuration information sent by the network device, where the configuration information indicates at least one duration, the at least one duration includes the first duration, and each of the at least one sleep level corresponds to one of the at least one duration.

In other words, the network device may configure, for the terminal device, one or more durations used to wake up the terminal device from the sleep state, and the terminal device may determine, based on the current sleep level, to select a corresponding duration as the first duration. It should be understood that the current sleep level of the terminal device may be understood as a sleep state of the terminal device on the second carrier when the terminal device receives the first message on the first carrier. Each of the at least one sleep level corresponds to one of the at least one duration. When the terminal device is at each sleep level, warm-up may be completed within a duration corresponding to the sleep level. That is, the terminal device is woken up from the sleep state.

It should be understood that at least one sleep level is configured for the terminal device, and time periods required to wake up the terminal device from the sleep state may be different at different sleep levels.

Optionally, the configuration information may be carried in a radio resource control RRC message, downlink control information DCI, or another message, and is sent by the network device to the terminal device.

In other words, the first duration may be configured by the network device for the terminal device by using an RRC message, or may be indicated to the terminal device by using the DCI. In some other embodiments, the first duration may alternatively be predefined in a standard. This is not specifically limited in this embodiment of this application.

Optionally, a plurality of durations in the at least one duration and a plurality of sleep levels in the at least one sleep level are configured for the terminal device, and the method 800 further includes: The terminal device determines the first duration from the plurality of durations based on a current sleep level. The first duration corresponds to the current sleep level of the terminal device.

The current sleep level is a sleep state of the terminal device on the second carrier when the terminal device receives the first message on the first carrier. That the first duration corresponds to the current sleep level of the terminal device may be understood as: the terminal device may be woken up from a sleep state corresponding to the current sleep level within the first duration.

Optionally, the method 800 further includes: When one sleep level is configured for the terminal device, the terminal device sends, to the network device, a state transition duration corresponding to the sleep level; or when a plurality of sleep levels are configured for the terminal device, the terminal device sends, to the network device, the plurality of sleep levels and a state transition duration corresponding to each of the plurality of sleep levels. The state transition duration is a time period required to wake up the terminal device from the sleep state.

Optionally, the state transition duration may be carried in terminal device capability information (UE capability information), terminal device assistance information (UE assistance information), or other information, and is reported by the terminal device to the network device.

In other words, when one sleep level is configured for the terminal device, time periods required to wake up the terminal device from the sleep state are approximately the same. Therefore, the terminal device may report, to the network device, the time period required to wake up the terminal device from the sleep state, that is, the state transition duration. When a plurality of sleep levels are configured for the terminal device, time periods for waking up the terminal device from the sleep state may be different when the terminal device is at different sleep levels. That is, when the terminal device is at different sleep levels, state transition durations may be different. Therefore, the terminal device may report a correspondence between a sleep level of the terminal device and a state transition duration to the network device, so that the network device configures, for the terminal device, a first duration corresponding to each sleep level.

In some other embodiments of this application, when a plurality of sleep levels are configured for the terminal device, the terminal device may also report, to the network device, a state transition duration corresponding to a sleep level that is in the plurality of sleep levels and that requires a longest time period to wake up the terminal device from the sleep state. In this way, regardless of a sleep level, the terminal device can be woken up from the sleep state within the longest state transition duration. In this way, the terminal device performs at least one of PDCCH monitoring and data transmission on the second carrier after a same duration.

It should be understood that, when a plurality of sleep levels are configured for the terminal device, the plurality of sleep levels may one-to-one correspond to state transition durations. That is, a state transition duration corresponding to each sleep level is different, and time periods required to wake up the terminal device from the sleep state at different sleep levels are different. In some other embodiments, the plurality of sleep levels and the state transition durations may be in a one-to-many relationship. That is, state transition durations corresponding to at least two sleep levels in the plurality of sleep levels are the same, and time periods required to wake up the terminal device from the sleep state at the at least two sleep levels in the plurality of sleep levels are the same.

It should be further understood that, when a plurality of sleep levels are configured for the terminal device, the plurality of sleep levels may one-to-one correspond to durations configured by the network device. To be specific, when the terminal device is at different sleep levels, in step S820, after receiving the first message on the first carrier, the terminal device monitors a PDCCH and/or transmits data on the second carrier after different durations. In some other embodiments, the plurality of sleep levels and the first durations configured by the network device may be in a one-to-many relationship. To be specific, when the terminal device is at at least two sleep levels of the plurality of sleep levels, in step S820, after receiving the first message, the terminal device monitors a PDCCH and/or transmits data on the second carrier after a same duration.

When a plurality of sleep levels are configured for the terminal device, the terminal device determines the current sleep level in a plurality of manners.

In an example, the terminal device may determine the current sleep level based on a relationship between a position in which the first timer is started and a DRX cycle configured on the first carrier. For example, two sleep levels (for example, deep sleep and light sleep) are configured for the terminal device. If both a position in which the terminal device starts the first timer and a position in which the terminal device receives the first message are in a current DRX cycle on a corresponding carrier, and a sleep time of the terminal device on the second carrier is within a DRX cycle configured on the first carrier, the terminal device may determine that the current sleep level of the terminal device is light sleep. If the position in which the terminal device starts the first timer is within a current DRX cycle on the second carrier, and the sleep time of the terminal device is within a plurality of DRX cycles configured on the first carrier (that is, the terminal device starts the first timer across DRX cycles), the terminal device may determine that the current sleep level is deep sleep.

In another example, the terminal device may determine the current sleep level based on a sleep duration of the terminal device on the second carrier and a sleep level classification threshold. The sleep duration of the terminal device on the second carrier may be determined based on a time difference between a position in which the terminal device starts the first timer (or a position in which the terminal device receives the first message on the first carrier) and an end time position of a previous DRX cycle of the terminal device on the second carrier. For another example, two sleep levels (for example, deep sleep and light sleep) are configured for the terminal device. If the time difference between the position in which the terminal device starts the first timer (or the position in which the terminal device receives the first message on the first carrier) and the end position of the previous DRX cycle on the second carrier is longer than or equal to a first threshold (for example, 10 ms), the terminal device may determine that the current sleep level is deep sleep. If the time difference between the position in which the terminal device starts the first timer (or the position in which the terminal device receives the first message on the first carrier) and the end position of the previous DRX cycle on the second carrier is shorter than the first threshold, the terminal device may determine that the current sleep level is light sleep. In some embodiments, when the time difference between the position in which the terminal device starts the first timer and the end position of the previous DRX cycle on the second carrier is equal to the first threshold, the terminal may also determine that the current sleep level is light sleep. For example, three sleep levels are configured for the terminal device. If the sleep duration of the terminal device on the second carrier is longer than or equal to the first threshold (for example, 10 ms), the terminal device determines that the current sleep level is deep sleep. If the sleep duration of the terminal device on the second carrier is between the first threshold (for example, 10 ms) and a second threshold (for example, 5 ms), the terminal device may determine that the current sleep level is moderate sleep. If the sleep duration of the terminal device on the second carrier is shorter than the second threshold (for example, 5 ms), the terminal device may determine that the current sleep level is light sleep. It should be understood that the first threshold should be longer than the second threshold. For a case in which a sleep duration is equal to the level classification threshold, it may be specified in a standard according to an actual requirement, and the sleep duration is classified into one of two adjacent sleep levels.

Optionally, the sleep level classification threshold may be reported by the terminal device to the network device. Correspondingly, the sleep level classification threshold may alternatively be configured by the network device for the terminal device.

In some embodiments of this application, when receiving the first message, the terminal device may indicate the terminal device to perform at least one of PDCCH monitoring and data transmission on the second carrier. In some other embodiments, the first message received by the terminal device indicates to perform at least one of PDCCH monitoring and data transmission on the second carrier only when a preset condition is met. In this way, the terminal device may not need to monitor a PDCCH and/or transmit data on the second carrier each time the terminal device receives the first message on the first carrier, to reduce power consumption of the terminal device on the second carrier.

In other words, when the preset condition is met, the first message received by the terminal device on the first carrier indicates the terminal device to perform at least one of PDCCH monitoring and data transmission on the second carrier. In this way, when the terminal device is in the active state on the second carrier, the terminal device monitors a PDCCH and/or transmits data on the second carrier based on the first message; or when the terminal device is in the sleep state on the second carrier, the terminal device may monitor a PDCCH and/or transmit data on the second carrier based on the first message after the first duration.

When the preset condition is not met, the first message received by the terminal device on the first carrier does not indicate the terminal device to perform at least one of PDCCH monitoring and data transmission on the second carrier, or indicates the terminal device not to monitor a PDCCH or transmit data on the second carrier. In this way, when the terminal device is in the active state on the second carrier, the terminal device may not monitor a PDCCH and/or transmit data on the second carrier. When the terminal device is in the sleep state on the second carrier, the terminal device may continue to be in the sleep state, and does not need to be woken up from the sleep state.

In an implementation, the preset condition includes: The first message includes indication information. In other words, when the preset condition is met, that is, when the first message includes the indication information, the first message indicates the terminal device to perform at least one of PDCCH monitoring and data transmission on the second carrier. When the preset condition is not met, that is, when the first message does not include the indication information, the first message does not indicate the terminal device to perform at least one of PDCCH monitoring and data transmission on the second carrier, or the first message indicates the terminal device not to monitor a PDCCH or transmit data on the second carrier.

In another implementation, the preset condition includes: The first message includes an indication field, and the indication field indicates the terminal device to perform at least one of PDCCH monitoring and data transmission on the second carrier. In other words, when the preset condition is met, that is, when the first message includes the indication field, and the indication field indicates the terminal device to perform at least one of PDCCH monitoring and data transmission on the second carrier, the first message indicates the terminal device to perform at least one of PDCCH monitoring and data transmission on the second carrier. When the preset condition is not met, that is, when the first message includes the indication field, and the indication field indicates the terminal device not to monitor a PDCCH or transmit data on the second carrier, the first message indicates the terminal device not to monitor a PDCCH or transmit data on the second carrier

In still another implementation, the preset condition includes: An occasion on which the terminal device receives the first message on the first carrier meets a preset rule. In other words, when the preset condition is met, that is, when the occasion on which the terminal device receives the first message on the first carrier meets the preset rule, the first message indicates the terminal device to perform at least one of PDCCH monitoring and data transmission on the second carrier. When the preset condition is not met, that is, when the occasion on which the terminal device receives the first message on the first carrier does not meet the preset rule, the first message does not indicate the terminal device to perform at least one of PDCCH monitoring and data transmission on the second carrier, or the first message indicates the terminal device not to monitor a PDCCH or transmit data on the second carrier. For example, if the terminal device may receive a plurality of first messages within one DRX cycle on the first carrier, and a first message currently received by the terminal device on the first carrier is the N^{th} message received by the terminal device within one DRX cycle, the currently received first message or the first message and a subsequent first message indicate the terminal device to perform at least one of PDCCH monitoring and data transmission on the second carrier. Correspondingly, for the network device, the preset condition includes: An occasion on which the network device sends the first message on the first carrier meets a preset rule.

It should be understood that, it can be learned from the foregoing description that the terminal device can monitor a PDCCH and/or transmit data on the second carrier only in the running process of the first timer. Therefore, when the preset condition is met, the first message may indicate the terminal device to start the first timer on the second carrier.

Therefore, embodiments of this application further provide another wireless communication method, to reduce power consumption of the terminal device. The following describes in detail embodiments of this application with reference to FIG. 9.

FIG. 9 is a schematic flowchart of another wireless communication method according to an embodiment of this application. The method shown in FIG. 9 may be performed by a terminal device. The terminal device may be, for example, the terminal device 120 shown in FIG. 1. The method 900 may include step S910 and step S920.

Step S910: The terminal device receives, on a first carrier, a first message sent by a network device.

The first message indicates the terminal device whether to start a first timer on a second carrier. To be specific, the first message may indicate the terminal device to start the first timer on the second carrier, or the first message may indicate the terminal device not to start the first timer on the second carrier.

Step S920: The terminal device starts the first timer based on the first message, and the terminal device performs at least one of physical downlink control channel PDCCH monitoring and data transmission on the second carrier in a running process of the first timer.

In other words, when the first message indicates the terminal device to start the first timer, the terminal device starts the first timer. Correspondingly, the terminal device may monitor a PDCCH and/or transmit data in the running process of the first timer. When the first message indicates the terminal device not to start the first timer, the terminal device does not start the first timer. Correspondingly, the terminal device may continue to maintain a previous state on the second carrier.

The terminal device starts the first timer based on the first message in a plurality of manners.

In an example, when the first message includes indication information, the terminal device starts the first timer. Correspondingly, when the first message does not include the indication information, the terminal device does not start the first timer.

In another example, when the first message includes an indication field, and the indication field indicates to start the first timer, the terminal device starts the first timer. Correspondingly, when the indication field indicates not to start the first timer, the terminal device does not start the first timer.

In still another example, when an occasion on which the terminal device receives the first message meets a preset rule, the terminal device starts the first timer. Correspondingly, when the occasion on which the terminal device receives the first message does not meet a preset rule, the terminal device does not start the first timer.

In short, when the preset condition is met, the first message indicates the terminal device to start the first timer. When the preset condition is not met, the first message indicates the terminal device not to start the first timer.

That when the preset condition is met, the first message indicates the terminal device to start the first timer may also be understood as: The terminal device indicates the terminal device to perform at least one of physical downlink control channel PDCCH monitoring and data transmission on the second carrier.

When the terminal device receives the first message on the first carrier, the terminal device may be in a sleep state on the second carrier. If the terminal device starts the first timer when receiving the first message, the terminal device needs to be first woken up from the sleep state on the second carrier. If the network device schedules the terminal device in this case, the foregoing problem that the terminal device cannot effectively transmit signaling or data in a process of waking up the terminal device from the sleep state occurs. Therefore, in this case, after step S920, the terminal device may further perform the method 800 in FIG. 8.

Specifically, if the terminal device is in the sleep state on the second carrier when the terminal device receives the first message, the method 900 further includes: After a first duration after the reception of the first message, the terminal device performs at least one of physical downlink control channel PDCCH monitoring and data transmission on the second carrier, where the first duration is used to wake up the terminal device from the sleep state. For a specific implementation, refer to the foregoing related descriptions of the method 800. For brevity, details are not described again.

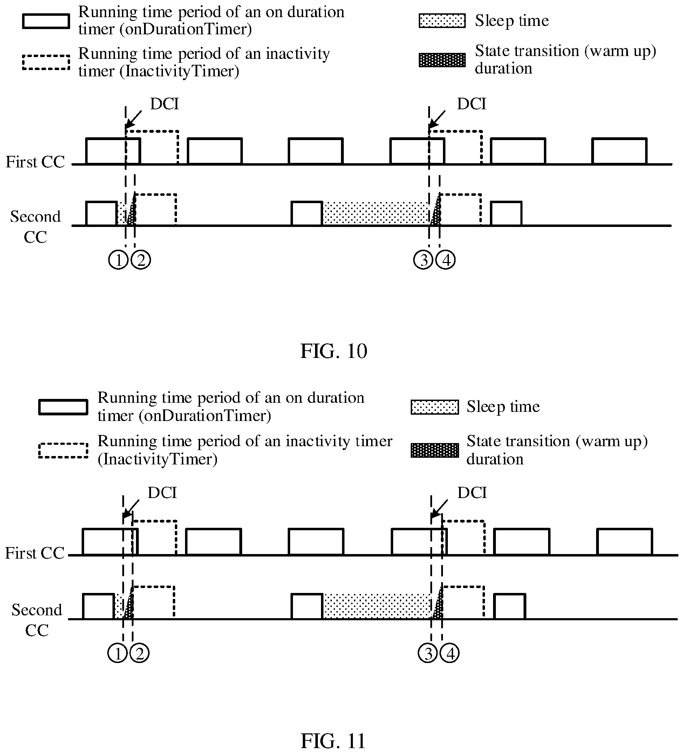

For ease of understanding, the following describes some specific and non-limiting examples in embodiments of this application in more detail with reference to FIG. 10 to FIG. 17. In FIG. 10 to FIG. 17, an example in which the first carrier belongs to FR1 and the second carrier belongs to FR2 is used for description. However, this embodiment of this application may also be applied to the first carrier and the second carrier in another frequency range, provided that there is a scenario in which the terminal device is in the active state on the first carrier and in the sleep state on the second carrier. In addition, in FIG. 10 to FIG. 17, an example in which an on duration timer (onDurationTimer) and/or an inactivity timer (InactivityTimer) are/is configured on the first carrier and the second carrier is used. However, as described above, another type of timer may also be configured on the first carrier and the second carrier in this embodiment of this application. It should be further noted that an example in which the first message received by the terminal device on the first carrier is DCI is used for description in FIG. 10 to FIG. 17. However, as described above, the first message received by the terminal device on the first carrier may alternatively be another message such as a PDCCH or a new message in this embodiment of this application. This is not specifically limited in this embodiment of this application.

FIG. 10 is a schematic diagram of a state of a terminal device in a wireless communication method according to an embodiment of this application.

As shown in FIG. 10, a first CC and a second CC are component carriers aggregated by the terminal device, and a DRX cycle is configured for both the first CC and the second CC. On the first CC, when each DRX cycle starts, the terminal device needs to start an onDurationTimer corresponding to the first CC. In a running process of the onDurationTimer corresponding to the first CC, the terminal device is in the active state on the first carrier. On the second CC, when each DRX cycle starts, the terminal device needs to start an onDurationTimer corresponding to the second CC. In a running process of the onDurationTimer corresponding to the second CC, the terminal device is in the active state on the second carrier. A solid box in the figure indicates a running time period of an onDurationTimer. It can be learned from the figure that an onDurationTimer value corresponding to the first CC is different from an onDurationTimer value corresponding to the second CC.

In a position ①, the onDurationTimer corresponding to the first CC is running, the terminal device is in the active state on the first CC, the onDurationTimer corresponding to the second CC expires, and the terminal device is in the sleep state on the second CC. When the terminal device receives, in the position ①, the first message such as DCI sent by the network device, the terminal device starts an InactivityTimer (that is, an example of the foregoing second timer) corresponding to the first CC, and does not immediately start an InactivityTimer (that is, an example of the foregoing first timer) corresponding to the second CC, but starts the InactivityTimer corresponding to the second CC in a position ② after the first duration. A time interval between the position ① and the position ② is the first duration, and the first duration is used to wake up the terminal device from the sleep state on the second CC. It should be understood that waking up the terminal device from the sleep state on the second CC may be understood as a process in which the terminal device warms up from the sleep state, and can monitor a PDCCH and/or transmit data on the second CC. In other words, the first duration is used for the terminal device to complete a warm-up process on the second CC.

The terminal device starts the InactivityTimer corresponding to the second CC in the position ②, and the terminal device is in the active state on the second CC during running of the InactivityTimer corresponding to the second CC. The terminal device has completed the warm-up process before the InactivityTimer corresponding to the second CC runs. Therefore, the network device side learns when the terminal device side starts the InactivityTimer corresponding to the second CC, and the network device side communicates with the terminal device during running of the InactivityTimer corresponding to the second CC, for example, sends a PDCCH to the terminal device or schedules the terminal device. Before the terminal device starts the InactivityTimer corresponding to the second CC, the network device learns that the terminal device is in the sleep state on the second CC, and the network device side does not communicate with the terminal device on the second CC either.

It should be noted that the first message received by the terminal device on the first CC indicates the terminal device to perform at least one of PDCCH monitoring and data transmission on the second CC. The terminal device can perform a corresponding action on the second CC only during running of the InactivityTimer corresponding to the second CC. Therefore, the first message may also be understood as indicating the terminal device to start the InactivityTimer corresponding to the second CC.

It should be understood that, from the perspective of the network device, provided that the InactivityTimer corresponding to the second CC is in a running state, the network device considers that the terminal device is in the active state (namely, the active time), and the terminal device can be scheduled. Therefore, in this embodiment of this application, a time position in which the InactivityTimer corresponding to the second CC is started is specified, so that the terminal device completes a warm-up process on the second CC before starting the InactivityTimer corresponding to the second CC. This avoids communication between the network device and the terminal device in the warm-up process of the terminal device, and improves communication quality of the terminal device.

A case of a position ③ and a position ④ shown in FIG. 10 is similar to a case of the position ① and the position ②, and details are not described again.

FIG. 10 and the following accompanying drawings show only examples of the sleep time and the state transition time of the terminal device on the second CC. It should be understood that the terminal device needs to perform a warm-up process when being woken up from the sleep state. Before the terminal device enables the onDurationTimers corresponding to the first CC and the second CC, the terminal device has completed warm-up processes. For brevity, not all of the warm-up processes are marked in the figure. In addition, the terminal device is in the sleep state within non-running time periods of the onDurationTimers and the InactivityTimers. The time periods are a sleep time of the terminal device on a corresponding carrier. For brevity, not all of the time periods are marked in the figure.

Refer to FIG. 10. The InactivityTimer corresponding to the first CC and the InactivityTimer corresponding to the second CC may be different timers. In this way, the terminal device may normally start or restart, according to an existing mechanism, the InactivityTimer corresponding to the first CC, and start the InactivityTimer corresponding to the second CC after the first duration. In this way, even if the terminal device cannot transmit signaling or data on the second CC within the first duration, the terminal device can still transmit signaling or data on the first CC, so that communication resources can be fully utilized.

In some other embodiments, the first CC and the second CC may share one InactivityTimer. For example, the InactivityTimer may be a MAC entity-level timer. Refer to FIG. 11. A difference from the wireless communication method shown in FIG. 10 lies in that, in FIG. 11, the terminal device starts the InactivityTimer corresponding to the first CC and starts the InactivityTimer corresponding to the second CC in a same time position, and starts both the InactivityTimers after the first duration after the terminal device receives the first message on the first carrier. In this way, time positions in which the terminal device starts the InactivityTimers on the first CC and the second CC may be the same. This may be consistent with an existing mechanism, and the first CC and the second CC share one timer.

The first duration is determined based on a time period required to wake up the terminal device from the sleep state (that is, state transition duration). The first duration should be longer than or equal to the state transition duration, to ensure that the terminal device completes warm-up within the first duration.

Therefore, after accessing the network, the terminal device needs to report the state transition duration to the network device. Optionally, the state transition duration may be carried in a terminal device capability message, a terminal device assistance message, or another message, and is reported by the terminal device to the network device.

There may be a minimum duration for waking up the terminal device from the sleep state. That is, the terminal device is just woken up from the sleep state within the minimum duration. Optionally, what the terminal device reports to the network device may be the minimum duration required to wake up the terminal device from the sleep state, that is, a minimum duration required to complete warm-up by the terminal device.

Correspondingly, the network device may configure the first duration for the terminal device based on the state transition duration reported by the terminal device. The first duration should be longer than or equal to the state transition duration reported by the terminal device.

The network device may send configuration information to the terminal device, and the configuration information indicates the first duration. Optionally, the configuration information may be carried in an RRC message or the first message.

For example, the configuration information sent by the network device to the terminal device may be in the following form:
2> if the PDCCH indicates a new transmission (DL or UL):
3> start or restart drx-InactivityTimer in the first symbol after a time period T after the end of the PDCCH reception.

In other words, the first message is carried on a PDCCH. If the PDCCH that carries the first message and that is monitored by the terminal device on the first CC indicates that the terminal device has a new transmission on the second CC, the terminal device starts or restarts the InactivityTimer corresponding to the second CC after the time period T after the end of the PDCCH reception, where T is the first duration.

When a plurality of sleep levels are configured for the terminal device, sleep degrees of the terminal device in the sleep state are different. Therefore, time periods (that is, warm-up times) required to wake up the terminal device from the sleep state may be different. In this way, the terminal device may report, to the network device, the plurality of sleep levels and a state transition duration corresponding to each of the plurality of sleep levels, and the network device configures a plurality of first durations for the terminal device based on the plurality of state transition durations reported by the terminal device. Each sleep level of the terminal device corresponds to one of the plurality of first durations. In this way, the terminal device may determine, from the plurality of durations according to a current sleep level of the terminal device, a first duration corresponding to the current sleep level, and then perform a specific action or behavior after the first duration. It should be understood that the corresponding first duration when the terminal device is at each sleep level should be longer than or equal to a state transition duration corresponding to the sleep level.

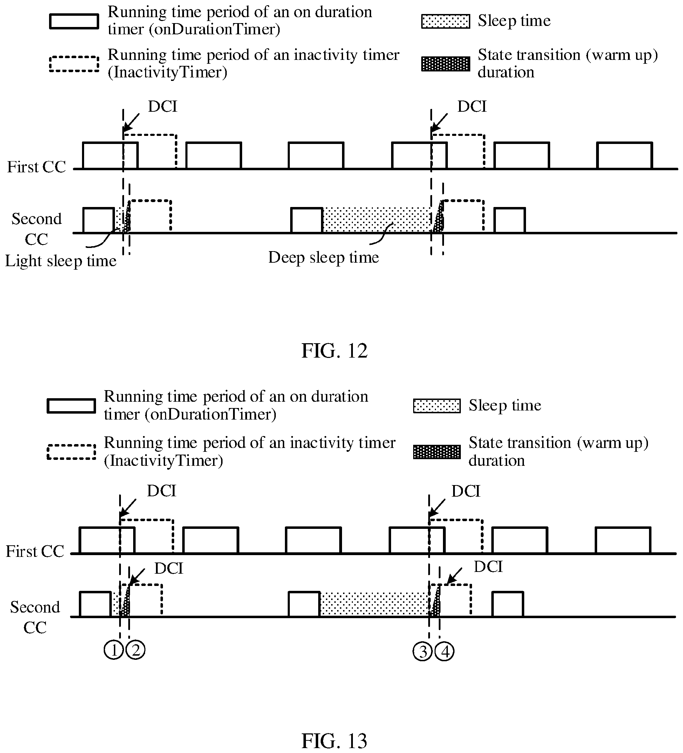

The following provides detailed descriptions with reference to FIG. 12. As shown in FIG. 12, different from FIG. 10, before a position ①, the terminal device is in light sleep (light sleep for short) on the second CC. In other words, a sleep time of the terminal device before the position ① is a light sleep time. Before a position ③, the terminal device is in deep sleep (deep sleep for short) on the second CC. In other words, a sleep time of the terminal device before the position ① is a deep sleep time. Because a time period required to wake up the terminal device from a light sleep state is different from a time period required to wake up the terminal device from a deep sleep state, the terminal device may determine the first duration based on a current sleep level, that is, select the first duration corresponding to the current sleep level from the plurality of first durations configured by the network device. For example, after receiving the first message such as DCI on the first CC in the position ①, the terminal device starts, after a relatively short first duration, the InactivityTimer corresponding to the second CC in a position ②. After receiving the first message such as DCI on the first CC in the position ③, the terminal device starts, after a relatively long first duration, the InactivityTimer corresponding to the second CC in a position ④.

The plurality of first durations are configured for the terminal device, so that the terminal can perform a specific behavior and action after the first duration corresponding to the current sleep level on the second CC, and communication resources can be fully utilized.

Certainly, in some other embodiments, when a plurality of sleep levels are configured for the terminal device, the network device may also configure one first duration for the terminal device. In this way, regardless of a sleep level of the terminal device on the second CC, the terminal device performs a specific behavior and action after the same duration after the reception of the first message on the first CC.

The terminal device may determine the current sleep level of the terminal device on the second CC in the following manners. Still refer to FIG. 12.

For example, before the position ①, if a sleep time of the terminal device on the second CC is within one DRX cycle of the terminal device on the first CC, the terminal device may determine that the terminal device is in the light sleep state on the second CC. When being woken up from the light sleep state, after a relatively short first duration, the terminal device starts the InactivityTimer corresponding to the second CC in the position ②. Similarly, before the position ③, if a sleep time of the terminal device on the second CC is within a plurality of DRX cycles of the terminal device on the first CC, the terminal device may determine that the terminal device is in the deep sleep state on the second CC. When the terminal device is woken up from the deep sleep state, after a relatively long first duration, the terminal device starts the InactivityTimer corresponding to the second CC in the position ④. It should be understood that three, four, or more sleep levels may be configured for the terminal device, and a manner in which the terminal device determines the sleep level on the second CC is similar. For example, three sleep levels are configured for the terminal device. When a sleep time of the terminal device on the second CC is within one DRX cycle of the terminal device on the first CC, the terminal device determines that the terminal device is in light sleep on the second CC. When a sleep time of the terminal device on the second CC is within two to four DRX cycles of the terminal device on the first CC, the terminal device determines that the terminal device is in moderate sleep on the second CC. When a sleep time of the terminal device on the second CC is within at least five DRX cycles of the terminal device on the first CC, the terminal device determines that the terminal device is in deep sleep on the second CC. This embodiment of this application is not limited thereto.

For another example, when a difference between the position ① in which the terminal device receives the first message and an end time position of a previous DRX cycle on the second CC is shorter than a first threshold, the terminal device determines that the terminal device is in the light sleep state on the second CC. When being woken up from the light sleep state, after a relatively short first duration, the terminal device starts the InactivityTimer corresponding to the second CC in the position ②. Similarly, when a difference between the position ③ in which the terminal device receives the first message and an end time position of a previous DRX cycle on the second CC is longer than or equal to the first threshold, the terminal device may determine that the terminal device is in the deep sleep state on the second CC. When the terminal device is woken up from the deep sleep state, after a relatively long first duration, the terminal device starts the InactivityTimer corresponding to the second CC in the position ④. It should be understood that three, four, or more sleep levels may be configured for the terminal device, and a manner in which the terminal device determines the sleep level on the second CC is similar. For example, three sleep levels are configured for the terminal device. When a difference between a time position in which the terminal device receives the first message and an end time position of a previous DRX cycle on the second CC is longer than or equal to the first threshold, the terminal device determines that the terminal device is in deep sleep on the second CC. When a difference between a time position in which the terminal device receives the first message and an end time position of a previous DRX cycle on the second CC is between the first threshold and a second threshold, the terminal device determines that the terminal device is in moderate sleep on the second CC, where the first threshold is longer than the second threshold. When a difference between a time position in which the terminal device receives the first message and an end time position of a previous DRX cycle on the second CC is shorter than the second threshold, the terminal device determines that the terminal device is in light sleep on the second CC. This embodiment of this application is not limited thereto.

In this embodiment of this application, a difference between a time position in which the terminal device receives the first message and an end time position of a previous DRX cycle on the second CC may be understood as a sleep duration of the terminal device, that is, a time period within which the terminal device already sleeps on the second CC from an end time position of a previous DRX cycle of the second CC to a time position in which the terminal device receives the first message on the first carrier.

In short, the sleep level of the terminal device on the second CC when the terminal device receives the first message on the first CC is determined based on an interval in which the sleep duration of the terminal device on the second CC is located and that is of a sleep level classification threshold of the terminal device.

Because starting of a timer on the network device side needs to be synchronized with starting of a corresponding timer on the terminal device side, the network device side needs to know which first duration is selected on the terminal device side. In other words, the network device side also needs to know a current sleep level of the terminal device. Optionally, a manner in which the network device side determines the current sleep level of the terminal device is the same as that of the terminal device. Therefore, in addition to reporting, to the network device, the state transition duration corresponding to each sleep level of the terminal device, the terminal device further needs to report a sleep level classification threshold to the network device, for example, a quantity of DRX cycles, the first threshold, the second threshold, or the like listed in the foregoing example.

Optionally, the network device may further configure the sleep level classification threshold for the terminal device based on the sleep level classification threshold reported by the terminal device. Alternatively, the network device considers the sleep level classification threshold reported by the terminal device as a preset configuration by default. This embodiment of this application is not limited thereto.

When a plurality of sleep levels are configured for the terminal device, reporting of the state transition duration, a configuration manner of the first duration, and the like are similar to those when one sleep level is configured for the terminal device in FIG. 10 and FIG. 11. For details, refer to related descriptions in FIG. 10 and FIG. 11. Details are not described herein again.

FIG. 13 is a schematic diagram of a state of a terminal device in a wireless communication method according to another embodiment. Different from FIG. 10, when the terminal device receives the first message such as DCI in a position ①, the terminal device starts the InactivityTimer corresponding to the second CC. However, the network device does not schedule data on the second CC within the first duration starting from the position ①, and the terminal device does not need to perform a specific behavior or action on the second CC within the first duration, for example, monitoring a PDCCH, or sending a sounding reference signal (sounding reference signal, SRS) or a channel state information report (channel state information report, CSI report), or transmitting data.

In this embodiment of this application, the first duration should be longer than or equal to the state transition duration. In this embodiment of this application, reporting of the state transition duration, configuration of the first duration, starting of the InactivityTimer corresponding to the first CC, and the like are similar to the manners in FIG. 10. For details, refer to related descriptions of FIG. 10 and FIG. 11. Details are not described herein again.

In addition, a plurality of sleep levels may alternatively be configured for the terminal device in this embodiment of this application. For details, refer to related descriptions of FIG. 12. Details are not described herein again.

For example, configuration information sent by the network device to the terminal device may be in the following form:
Data scheduling within a time period T from start of InactivityTimer is not expected.

In other words, the terminal device does not schedule data within the first duration after the InactivityTimer corresponding to the second CC is started.

It should be understood that, because the terminal device starts the InactivityTimer corresponding to the second CC when receiving the first message, the process of waking up the terminal device from the sleep state on the second CC is completed during running of the InactivityTimer corresponding to the second CC. From the perspective of the network device, provided that the InactivityTimer corresponding to the second CC is in a running state, the network device considers that the terminal device is in the active state, and the terminal device can be scheduled. In this embodiment of this application, behaviors of the network device and the terminal device within the first duration are limited when the InactivityTimer corresponding to the second CC is started, so that the terminal device and the network device can be prevented from communicating in the process of waking up the terminal device from the sleep state, to improve communication quality of the terminal device.

The wireless communication methods shown in FIG. 10 to FIG. 13 may be used in a cross-carrier scheduling scenario. Cross-carrier scheduling means that the terminal device monitors and receives a PDCCH on one carrier, but receives, on another carrier, data (for example, a physical downlink shared channel (physical downlink shared channel, PDSCH) or a physical downlink shared channel (physical uplink shared channel, PUSCH)) scheduled by the PDCCH. The cross-carrier scheduling may be used in a carrier aggregation scenario to optimize power consumption on a carrier. For example, in a 5G communications system, the terminal device may perform carrier aggregation by using FR1 and FR2, and cross-carrier scheduling may be used to optimize power consumption on an FR2 carrier. For example, the FR1 CC may schedule data on the FR2 CC in a cross-carrier manner. That is, the terminal device monitors and receives a PDCCH only on the FR1 CC, and in this case, the terminal device may be in the sleep state and does not need to monitor the PDCCH on the FR2 CC (low power consumption). When data needs to be transmitted on the FR2 CC, data scheduling on the FR2 CC is determined by using the PDCCH received on the FR1 CC. In this case, the terminal device needs to be woken up on the FR2 CC to receive a PDSCH or a PUSCH.

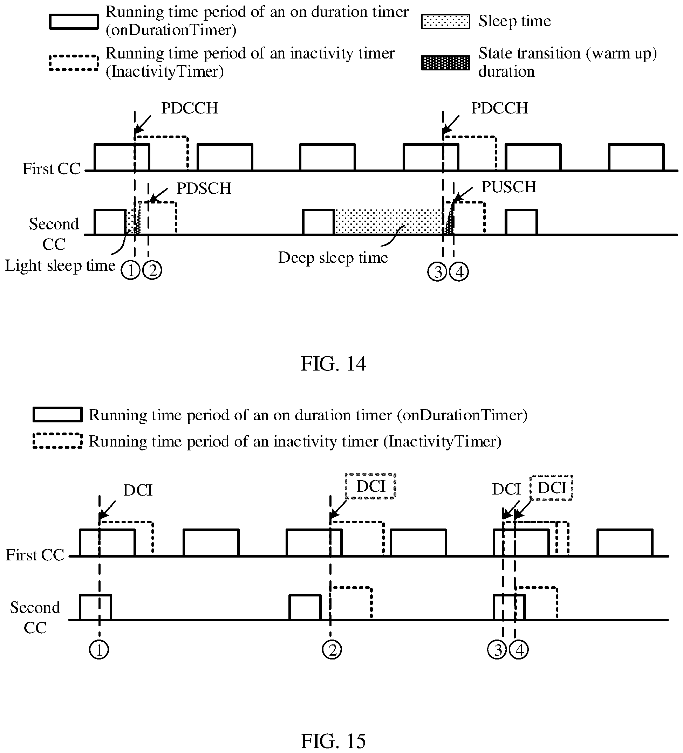

In a cross-carrier scheduling scenario, as shown in FIG. 14, the first message such as a PDCCH received by the terminal device on the first CC indicates the terminal device to transmit data on the second CC. The first message may indicate a position of the data on the second CC. Considering that the terminal device is in the sleep state on the second CC, if the terminal device wants to transmit data, the terminal device needs to be first woken up from the sleep state. In this embodiment of this application, an interval between a time position of the data such as a PDSCH or a PUSCH indicated in the first message and a time position in which the terminal device receives the first message such as the PDCCH should be longer than or equal to the first duration. The first duration is longer than or equal to a time period required to wake up the terminal device from the sleep state.

As shown in FIG. 14, for example, if the first message such as the PDCCH received by the terminal device in a position ① indicates the terminal device to transmit a PDSCH on the second CC, a time interval (that is, a duration between the first message such as the PDCCH and the PDSCH) for cross-carrier scheduling on the first CC and the second CC needs to be longer than or equal to the first duration. In other words, the terminal device receives the PDSCH on the second CC in a position ②, a time interval between the position ① and the position ② is longer than the first duration, and a process of waking up the terminal device from the sleep state is completed before the position ②. For another example, if the first message such as the PDCCH received by the terminal device in a position ③ indicates the terminal device to transmit a PUSCH on the second CC, a time interval (that is, a duration between the first message such as the PDCCH and the PUSCH) for cross-carrier scheduling on the first CC and the second CC needs to be longer than or equal to the first duration. In other words, the terminal device receives the PUSCH on the second CC in a position ④, a time interval between the position ③ and the position ④ is longer than the first duration, and a process of waking up the terminal device from the sleep state is completed before the position ④.

In some other embodiments, a time interval for cross-carrier scheduling on the first CC and the second CC (the time interval between the first message such as the PDCCH and the PDSCH or the time interval between the first message such as the PDCCH and the PUSCH) may be set to be longer than or equal to the state transition duration, that is, a time period required to wake up the terminal device from the sleep state, or a time period required by the terminal device to complete the warm-up process.

It should be understood that, in the cross-carrier scheduling scenario, a plurality of sleep levels may also be configured for the terminal device. In this way, a time interval for the cross-carrier scheduling on the first CC and the second CC may be determined based on a sleep level of the terminal device on the second CC when the terminal device receives the first message. It should be further understood that although the terminal device sets the onDurationTimer and the InactivityTimer on the second CC, the terminal device does not need to monitor the PDCCH during running of these timers on the second CC, so that power consumption of the terminal device can be reduced. For other parts that are not described in detail, refer to the foregoing related descriptions. Details are not described again.

In the cross-carrier scheduling scenario in this embodiment of this application, the position in which the terminal device transmits data on the second CC is after the terminal device completes the process of being woken up from the sleep state. This can prevent the terminal device from transmitting data in the process of being woken up from the sleep state, to improve communication quality.

In the foregoing embodiment, after the terminal device receives the first message on the first CC, the first message indicates the terminal device to monitor a PDCCH and/or transmit data on the second CC. To further reduce power consumption of the terminal device, an embodiment of this application further provides another wireless network communication method. Only after a preset condition is met, the first message indicates the terminal device to monitor a PDCCH and/or transmit data on the second CC. The following provides detailed descriptions with reference to the accompanying drawings.

Refer to FIG. 15. A difference from FIG. 10 to FIG. 14 is that only when a preset condition is met, the first message received by the terminal device on the first CC indicates the terminal device to start the InactivityTimer corresponding to the second CC. For example, in a position ① and a position ③, the first message such as DCI received by the terminal device on the first CC does not meet the preset condition. Therefore, the terminal device does not start the InactivityTimer corresponding to the second CC on the second CC, and cannot monitor a PDCCH and/or transmit data on the second CC. In a position ② and a position ④, the first message such as DCI received by the terminal device on the first CC meets the preset condition. Therefore, the terminal device starts the InactivityTimer corresponding to the second CC, and then the terminal device monitors a PDCCH and/or transmits data within a running time period of the InactivityTimer corresponding to the second CC.

Specifically, for example, in the position ① and the position ③, the first message such as DCI received by the terminal device on the first CC does not include indication information. In the position ② and the position ④, the first message such as DCI received by the terminal device on the first CC includes the indication information. Therefore, the terminal device does not start the InactivityTimer corresponding to the second CC in the position ① and the position ③, and starts the InactivityTimer corresponding to the second CC in the position ② and the position ④.

For another example, in the position ① and the position ③, the terminal device receives, on the first CC, the first message such as a PDCCH carrying an indication field, and the indication field indicates to start the InactivityTimer corresponding to the second CC or affects the InactivityTimer corresponding to the second CC. In the position ② and the position ④, the terminal device receives, on the first CC, the first message such as a PDCCH carrying an indication field, and the indication field indicates not to start the InactivityTimer corresponding to the second CC or not to affect the InactivityTimer corresponding to the second CC. Therefore, the terminal device does not start the InactivityTimer corresponding to the second CC in the position ① and the position ③, and starts the InactivityTimer corresponding to the second CC in the position ② and the position ④.

For another example, the first message such as DCI received by the terminal device on the first CC is the N^{th} first message received by the terminal device within a DRX cycle configured on the first CC, and the N^{th} first message indicates to start the InactivityTimer corresponding to the second CC, or the first message after the N^{th} first message indicates to start the InactivityTimer corresponding to the second CC. Refer to FIG. 15. In the position ④, the first message such as DCI received by the terminal device on the first CC is the 2^{nd} first message received by the terminal device within the DRX cycle configured on the first CC. Therefore, the 2^{nd} first message indicates to start the InactivityTimer corresponding to the second CC. Certainly, when an occasion on which the terminal device receives the first message meets a preset rule, the first message may indicate to start the InactivityTimer corresponding to the second CC. The preset rule may be set based on an actual requirement. This is not limited in this embodiment of this application.

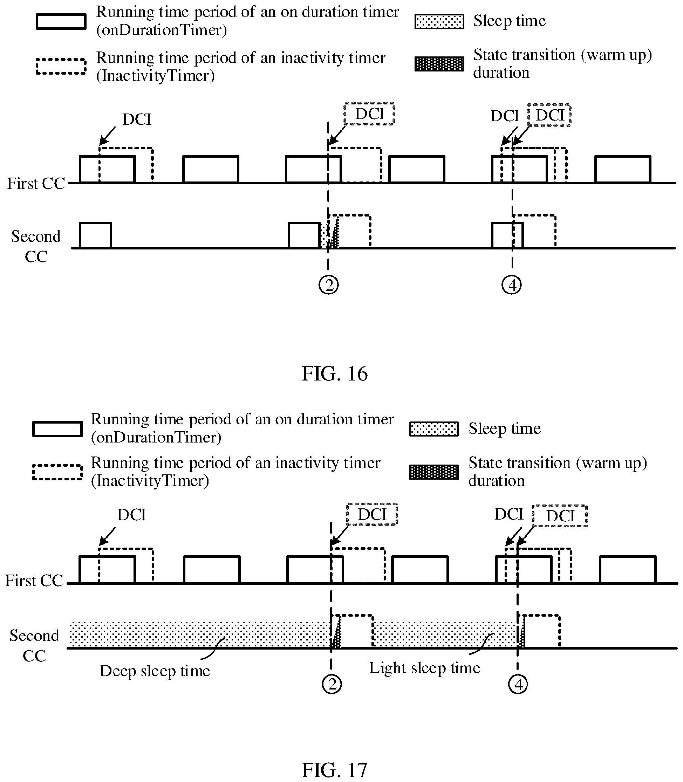

Still refer to FIG. 15. In the position ④, when the terminal device receives the first message on the first CC, the terminal device is in the active state on the second CC, and the terminal device may directly monitor a PDCCH and/or transmit data within a running time period of the InactivityTimer corresponding to the second CC. However, in the position ②, when the terminal device receives the first message on the first CC, the terminal device is in the sleep state on the second CC. Therefore, if the terminal device wants to monitor a PDCCH and/or transmit data within a running time period of the InactivityTimer corresponding to the second CC, the terminal device needs to be first woken up from the sleep state (refer to FIG. 16). If an existing mechanism is used, a problem that the terminal device cannot effectively transmit signaling and data in a process of being woken up from the sleep state occurs. The methods in FIG. 10 to FIG. 14 may be further used in the methods in FIG. 15 and FIG. 16. For details, refer to the foregoing descriptions. Details are not described herein again.

To further reduce power consumption of the terminal device on the second CC, this application provides another wireless communication method. Refer to FIG. 17. Different from FIG. 16, only the InactivityTimer corresponding to the second CC may be configured on the second CC, and an onDurationTimer corresponding to the second CC is canceled. In this way, the terminal device does not monitor a PDCCH on the second CC by default, and the terminal device starts the InactivityTimer corresponding to the second CC only when the first message received by the terminal device on the first CC meets the preset condition. The terminal device monitors a PDCCH and/or transmits data within the running time period of the InactivityTimer corresponding to the second CC. Because the onDurationTimer corresponding to the second CC is canceled in FIG. 17, when the terminal device receives the first message on the first CC, the terminal device is in the sleep state on the second CC. Similar to the problem in FIG. 16, if the terminal device wants to monitor a PDCCH and/or transmit data within the running time period of the InactivityTimer corresponding to the second CC, the terminal device needs to be first woken up from the sleep state. If an existing mechanism is used, a problem that the terminal device cannot effectively transmit signaling and data in a process of being woken up from the sleep state occurs. The methods in FIG. 10 to FIG. 14 may be further used in the method in FIG. 17. For details, refer to the foregoing descriptions. Details are not described herein again.

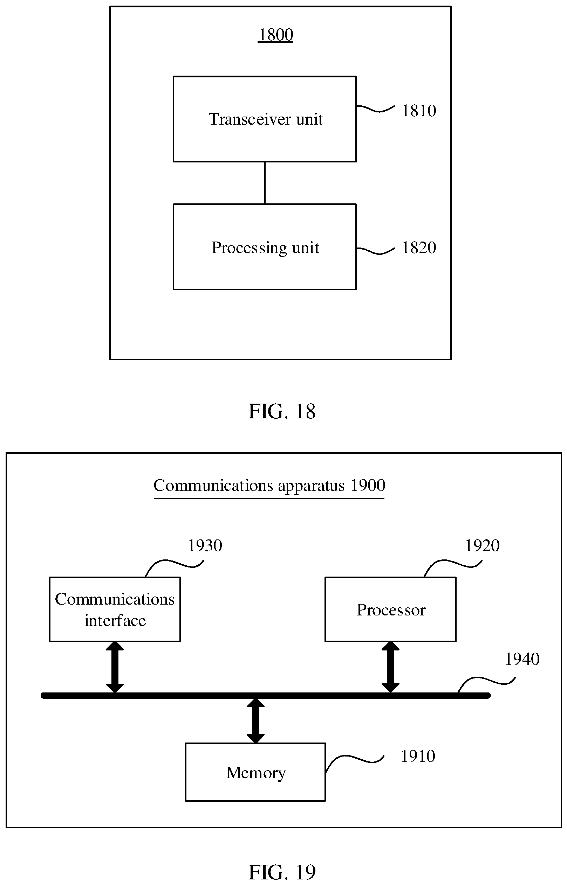

The foregoing describes the method embodiments in embodiments of this application in detail above with reference to FIG. 1 to FIG. 17, and the following describes in detail apparatus embodiments in embodiments of this application with reference to FIG. 18 to FIG. 21. It should be understood that, descriptions of the method embodiments correspond to descriptions of the apparatus embodiments. Therefore, for a part not described in detail, refer to the foregoing method embodiments.

FIG. 18 is a schematic diagram of a structure of a terminal device according to an embodiment of this application. A terminal device 1800 in FIG. 18 may be a specific example of the terminal device 120 in FIG. 1. The terminal device shown in FIG. 18 may be configured to perform the method 800 in FIG. 8 or the method 900 in FIG. 9, and may specifically implement the embodiments shown in FIG. 10 to FIG. 17. To avoid redundancy, details are not described again.

The terminal device 1800 shown in FIG. 18 includes a transceiver unit 1810 and a processing unit 1820.

The transceiver unit 1810 is configured to receive, on a first carrier, a first message sent by a network device, where the first message indicates the terminal device to perform at least one of physical downlink control channel PDCCH monitoring and data transmission on a second carrier.

The processing unit 1820 is configured to: when the terminal device is in a sleep state on the second carrier, after a first duration, perform at least one of PDCCH monitoring and data transmission on the second carrier.

Optionally, the processing unit 1820 is further configured to start a first timer after the first duration, where the terminal device can perform at least one of PDCCH monitoring and data transmission on the second carrier in a running process of the first timer.

Optionally, the processing unit 1820 is further configured to start the first timer when the first message is received, where the terminal device does not monitor a PDCCH or transmit data on the second carrier within the first duration.

Optionally, the processing unit 1820 is further configured to start a second timer after the first duration; or start the second timer when the first message is received, where the terminal device can perform at least one of PDCCH monitoring and data transmission on the first carrier in a running process of the second timer.

Optionally, the first duration is longer than or equal to a state transition duration, and the state transition duration is a time period required to wake up the terminal device from the sleep state.

Optionally, when the first message indicates the terminal device to transmit data on the second carrier, a time interval between the data and the first message is longer than or equal to the first duration.

Optionally, when a preset condition is met, the first message indicates the terminal device to perform at least one of PDCCH monitoring and data transmission on the second carrier.

Optionally, the preset condition includes: The first message includes indication information; or the first message includes an indication field, and the indication field indicates the terminal device to perform at least one of PDCCH monitoring and data transmission on the second carrier; or an occasion on which the terminal device receives the first message meets a preset rule.

Optionally, a frequency range of the first carrier is below 6 GHz, and/or a frequency range of the second carrier is a millimeter-wave band.

FIG. 19 is a schematic diagram of a structure of a communications apparatus according to an embodiment of this application. A communications apparatus 1900 in FIG. 19 may be a specific example of the terminal device 120 in FIG. 1. The communications apparatus shown in FIG. 19 may be configured to perform the method 800 in FIG. 8 or the method 900 in FIG. 9. To avoid redundancy, details are not described again.

The communications apparatus may be a terminal device, may be an apparatus in the terminal device, or may be an apparatus that can match the terminal device for using. The communications apparatus may be a chip system. In this embodiment of this application, the chip system may include a chip, or may include a chip and another discrete component. The communications apparatus 1900 includes at least one processor 1920, configured to implement the methods provided in embodiments of this application. For details, refer to detailed descriptions in the method examples. Details are not described herein again. Optionally, functions of the processor 1920 are the same as those of the processing unit 1820.

The communications apparatus 1900 may further include at least one memory 1910, configured to store program instructions and/or data. The memory 1910 is coupled to the processor 1920. Couplings in this embodiment of this application are indirect couplings or communication connections between apparatuses, units, or modules, may be electrical, mechanical, or in another form, and are used for information exchange between the apparatuses, the units, or the modules. The processor 1910 may operate in collaboration with the memory 1920. The processor 1910 may execute the program instructions stored in the memory 1920. At least one of the at least one memory may be included in the processor.

The communications apparatus 1900 may further include a communications interface 1930, configured to communicate with another device through a transmission medium, so that an apparatus in the communications apparatus 1900 can communicate with the another device. For example, the communications interface may be a transceiver, a circuit, a bus, a module, a pin, or another type of communications interface. For example, the communications apparatus 1900 is a terminal device, and the another device is a network device. The processor 1920 receives and sends data through the communications interface 1930, and is configured to implement the method performed by the terminal device in the embodiment corresponding to FIG. 8 or FIG. 9.

This embodiment of this application does not limit a specific connection medium between the communications interface 1930, the processor 1920, and the memory 1910. In this embodiment of this application, the memory 1910, the processor 1920, and the communications interface 1930 are connected through a bus 1940 in FIG. 19, and the bus is represented by a bold line in FIG. 19. A manner of connection between other components is schematically described, and is not limited thereto. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used in FIG. 19 to represent the bus, but this does not mean that there is only one bus or one type of bus.

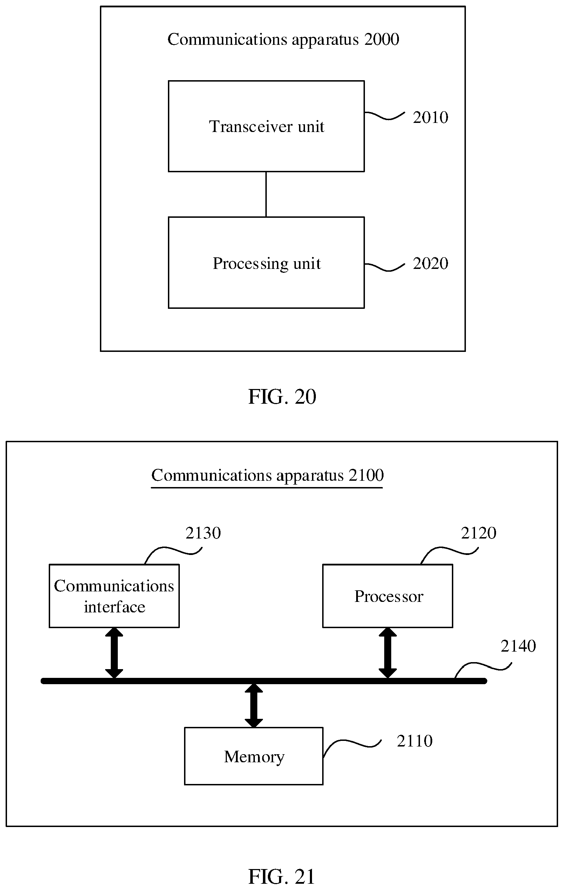

FIG. 20 is a schematic diagram of a structure of a network device according to an embodiment of this application. The network device 2000 in FIG. 20 may be a specific example of the network device 110 in FIG. 1. The network device shown in FIG. 20 may be configured to perform the method 800 in FIG. 8 or the method 900 in FIG. 9, and may specifically implement the embodiments shown in FIG. 10 to FIG. 17. To avoid redundancy, details are not described again.

The network device 2000 shown in FIG. 20 includes a transceiver unit 2010 and a processing unit 2020.

The transceiver 1010 is configured to send a first message to a terminal device on a first carrier, where the first message indicates the terminal device to perform at least one of physical downlink control channel PDCCH monitoring and data transmission on a second carrier.

The processing unit 2020 is configured to: when the terminal device is in a sleep state on the second carrier, after a first duration, perform at least one of PDCCH sending and data transmission to the terminal device on the second carrier.

Optionally, the first duration is longer than or equal to a state transition duration, and the state transition duration is a time period required to wake up the terminal device from the sleep state.

Optionally, when the first message indicates the terminal device to transmit data on the second carrier, a time interval between the data and the first message is longer than or equal to the first duration.

Optionally, when a preset condition is met, the first message indicates the terminal device to perform at least one of PDCCH monitoring and data transmission on the second carrier.

Optionally, the preset condition includes: The first message includes indication information; or the first message includes an indication field, and the indication field indicates the terminal device to perform at least one of PDCCH monitoring and data transmission on the second carrier; or an occasion on which the network device sends the first message meets a preset rule.

Optionally, a frequency range of the first carrier is below 6 GHz, and/or a frequency range of the second carrier is a millimeter-wave band.

FIG. 21 is a schematic diagram of a structure of a communications apparatus according to an embodiment of this application. A communications apparatus 2100 in FIG. 21 may be a specific example of the network device 110 in FIG. 1. The communications apparatus shown in FIG. 21 may be configured to perform the method in FIG. 8 or FIG. 9. To avoid redundancy, details are not described again.

The communications apparatus may be a network device, may be an apparatus in the network device, or may be an apparatus that can match the network device for using. The communications apparatus may be a chip system. In this embodiment of this application, the chip system may include a chip, or may include a chip and another discrete component. The communications apparatus 2100 includes at least one processor 2120, configured to implement the methods provided in embodiments of this application. For details, refer to detailed descriptions in the method examples. Details are not described herein again. Optionally, functions of the processor 2120 are the same as those of the processing unit 2020.

The communications apparatus 2100 may further include at least one memory 2110, configured to store program instructions and/or data. The memory 2110 is coupled to the processor 2120. Couplings in this embodiment of this application are indirect couplings or communication connections between apparatuses, units, or modules, may be electrical, mechanical, or in another form, and are used for information exchange between the apparatuses, the units, or the modules. The processor 2110 may operate in collaboration with the memory 2120. The processor 2110 may execute the program instructions stored in the memory 2120. At least one of the at least one memory may be included in the processor.

The communications apparatus 2100 may further include a communications interface 2130, configured to communicate with another device through a transmission medium, so that an apparatus in the communications apparatus 2100 can communicate with the another device. For example, the communications interface may be a transceiver, a circuit, a bus, a module, a pin, or another type of communications interface. For example, the communications apparatus 2100 is a terminal device, and the another device is a network device. The processor 2120 receives and sends data through the communications interface 2130, and is configured to implement the method performed by the network device in the embodiment corresponding to FIG. 8 or FIG. 9.

This embodiment of this application does not limit a specific connection medium between the communications interface 2130, the processor 2120, and the memory 2110. In this embodiment of this application, the memory 2110, the processor 2120, and the communications interface 2130 are connected through a bus 2140 in FIG. 21, and the bus is represented by a bold line in FIG. 21. A manner of connection between other components is schematically described, and is not limited thereto. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used in FIG. 21 to represent the bus, but this does not mean that there is only one bus or one type of bus.

In conclusion, embodiments of this application provide a wireless communication method, a terminal device, and a network device.

### Embodiment 1

A wireless communication method is provided, including: A terminal device receives, on a first carrier, a first message sent by a network device, where the first message indicates the terminal device to perform at least one of physical downlink control channel PDCCH monitoring and data transmission on a second carrier. When the terminal device is in a sleep state on the second carrier, after a first duration, the terminal device performs at least one of PDCCH monitoring and data transmission on the second carrier.

Optionally, the method according to Embodiment 1 further includes: The terminal device starts a first timer after the first duration, where the terminal device can perform at least one of PDCCH monitoring and data transmission on the second carrier in a running process of the first timer; or the terminal device starts the first timer when receiving the first message, where the terminal device does not monitor a PDCCH or transmit data on the second carrier within the first duration.

Optionally, the method according to Embodiment 1 further includes: The terminal device starts a second timer after the first duration; or the terminal device starts the second timer when receiving the first message, where the terminal device can perform at least one of PDCCH monitoring and data transmission on the first carrier in a running process of the second timer.

Optionally, in the method according to Embodiment 1, the first duration is longer than or equal to a state transition duration, and the state transition duration is a time period required to wake up the terminal device from the sleep state.

Optionally, in the method according to Embodiment 1, when the first message indicates the terminal device to transmit data on the second carrier, a time interval between the data and the first message is longer than or equal to the first duration.

Optionally, in the method according to Embodiment 1, at least one sleep level is configured for the terminal device, and the method further includes: The terminal device receives configuration information sent by the network device, where the configuration information indicates at least one duration, the at least one duration includes the first duration, and each of the at least one sleep level corresponds to one of the at least one duration.

Optionally, in the method according to Embodiment 1, a plurality of durations in the at least one duration and a plurality of sleep levels in the at least one sleep level are configured for the terminal device, and the method further includes: The terminal device determines the first duration from the plurality of durations based on a current sleep level.

Optionally, the method according to Embodiment 1 further includes: When one sleep level is configured for the terminal device, the terminal device sends, to the network device, a state transition duration corresponding to the sleep level; or when a plurality of sleep levels are configured for the terminal device, the terminal device sends, to the network device, the plurality of sleep levels and a state transition duration corresponding to each of the plurality of sleep levels, where the state transition duration is a time period required to wake up the terminal device from the sleep state.

Optionally, in the method according to Embodiment 1, the first message includes physical downlink control information DCI.

Optionally, in the method according to Embodiment 1, when a preset condition is met, the first message indicates the terminal device to perform at least one of PDCCH monitoring and data transmission on the second carrier.

Optionally, in the method according to Embodiment 1, the preset condition includes: The first message includes indication information; or the first message includes an indication field, and the indication field indicates the terminal device to perform at least one of PDCCH monitoring and data transmission on the second carrier; or an occasion on which the terminal device receives the first message meets a preset rule.

Optionally, in the method according to Embodiment 1, a frequency range of the first carrier is below 6 GHz, and/or a frequency range of the second carrier is a millimeter-wave band.

### Embodiment 2

A wireless communication method is provided, including: A network device sends a first message to a terminal device on a first carrier, where the first message indicates the terminal device to perform at least one of physical downlink control channel PDCCH monitoring and data transmission on a second carrier. When the terminal device is in a sleep state on the second carrier, after a first duration, the network device performs at least one of PDCCH sending and data transmission to the terminal device on the second carrier.

Optionally, in the method according to Embodiment 2, the first duration is longer than or equal to a state transition duration, and the state transition duration is a time period required to wake up the terminal device from the sleep state.

Optionally, in the method according to Embodiment 2, when the first message indicates the terminal device to transmit data on the second carrier, a time interval between the data and the first message is longer than or equal to the first duration.

Optionally, in the method according to Embodiment 2, at least one sleep level is configured for the terminal device, and the method further includes: The network device sends configuration information to the terminal device, where the configuration information indicates at least one duration, the at least one duration includes the first duration, and each of the at least one sleep level corresponds to one of the at least one duration.

Optionally, the method according to Embodiment 2 further includes: When one sleep level is configured for the terminal device, the network device receives a state transition duration that corresponds to the sleep level and that is sent by the terminal device; or when a plurality of sleep levels are configured for the terminal device, the network device receives the plurality of sleep levels and a state transition duration corresponding to each of the plurality of sleep levels that are sent by the terminal device, where the state transition duration is a time period required for the terminal device to transit from the sleep state to an active state.

Optionally, in the method according to Embodiment 2, the first message includes physical downlink control information DCI.

Optionally, in the method according to Embodiment 2, when a preset condition is met, the first message indicates the terminal device to perform at least one of PDCCH monitoring and data transmission on the second carrier.

Optionally, in the method according to Embodiment 2, the preset condition includes: The first message includes indication information; or the first message includes an indication field, and the indication field indicates the terminal device to perform at least one of PDCCH monitoring and data transmission on the second carrier; or an occasion on which the network device sends the first message meets a preset rule.

Optionally, in the method according to Embodiment 2, a frequency range of the first carrier is below 6 GHz, and/or a frequency range of the second carrier is a millimeter-wave band.

### Embodiment 3

A wireless communication method is provided, including: A terminal device receives, on a first carrier, a first message sent by a network device, where the first message indicates whether the terminal device starts a first timer on a second carrier. The terminal device starts the first timer based on the first message, and the terminal device performs at least one of physical downlink control channel PDCCH monitoring and data transmission on the second carrier in a running process of the first timer.

Optionally, in the method according to Embodiment 3, that the terminal device starts the first timer based on the first message includes: When the first message includes indication information, the terminal device starts the first timer; or when the first message includes an indication field and the indication field indicates to start the first timer, the terminal device starts the first timer; or when an occasion on which the terminal device receives the first message meets a preset rule, the terminal device starts the first timer.

Optionally, in the method according to Embodiment 3, when the terminal device receives the first message, if the terminal device is in a sleep state on the second carrier, the method further includes: After a first duration after the reception of the first message, the terminal device performs at least one of physical downlink control channel PDCCH monitoring and data transmission on the second carrier.

Optionally, the method according to Embodiment 3 further includes: The terminal device starts the first timer after the first duration; or the terminal device starts the first timer when receiving the first message, where the terminal device does not monitor a PDCCH or transmit data on the second carrier within the first duration.

Optionally, the method according to Embodiment 3 further includes: The terminal device starts a second timer after the first duration after the reception of the first message; or the terminal device starts the second timer when receiving the first message, where the terminal device can perform at least one of PDCCH monitoring and data transmission on the first carrier in a running process of the second timer.

Optionally, in the method according to Embodiment 3, the first duration is longer than or equal to a state transition duration, and the state transition duration is a time period required to wake up the terminal device from the sleep state.

Optionally, in the method according to Embodiment 3, when the first message further indicates the terminal device to transmit data on the second carrier, a time interval between the data and the first message is longer than or equal to the first duration.

Optionally, in the method according to Embodiment 3, at least one sleep level is configured for the terminal device, and the method further includes: The terminal device receives configuration information sent by the network device, where the configuration information indicates at least one duration, the at least one duration includes the first duration, and each of the at least one sleep level corresponds to one of the at least one duration.

Optionally, in the method according to Embodiment 3, a plurality of durations in the at least one duration and a plurality of sleep levels in the at least one sleep level are configured for the terminal device, and the method further includes: The terminal device determines the first duration from the plurality of durations based on a current sleep level.

Optionally, the method according to Embodiment 3 further includes: When one sleep level is configured for the terminal device, the terminal device sends, to the network device, a state transition duration corresponding to the sleep level; or when a plurality of sleep levels are configured for the terminal device, the terminal device sends, to the network device, the plurality of sleep levels and a state transition duration corresponding to each of the plurality of sleep levels, where the state transition duration is a time period required to wake up the terminal device from the sleep state.

Optionally, in the method according to Embodiment 3, the first message includes physical downlink control information DCI.

Optionally, in the method according to Embodiment 3, a frequency range of the first carrier is below 6 GHz, and/or a frequency range of the second carrier is a millimeter-wave band.

### Embodiment 4

A wireless communication method is provided, including: A network device sends a first message to a terminal device on a first carrier, where the first message indicates whether the terminal device starts a first timer on a second carrier, and the terminal device can perform at least one of physical downlink control channel PDCCH monitoring and data transmission on the second carrier in a running process of the first timer.

Optionally, in the method according to Embodiment 4, when the following condition is met, the first message indicates the terminal device to start the first timer on the second carrier: The first message includes indication information; or the first message includes an indication field and the indication field indicates to start the first timer; or a sending occasion of the first message meets a preset rule.

Optionally, in the method according to Embodiment 4, when the terminal device is in a sleep state, the method further includes: After a first duration after the sending of the first message, the network device performs at least one of PDCCH sending and data transmission to the terminal device on the second carrier.

Optionally, in the method according to Embodiment 4, the first duration is longer than or equal to a state transition duration, and the state transition duration is a time period required to wake up the terminal device from the sleep state.

Optionally, in the method according to Embodiment 4, at least one sleep level is configured for the terminal device, and the method further includes: The network device sends configuration information to the terminal device, where the configuration information indicates at least one duration, the at least one duration includes the first duration, and each of the at least one sleep level corresponds to one of the at least one duration.

Optionally, the method according to Embodiment 4 further includes: When one sleep level is configured for the terminal device, the network device receives a state transition duration that corresponds to the sleep level and that is sent by the terminal device; or when a plurality of sleep levels are configured for the terminal device, the network device receives the plurality of sleep levels and a state transition duration corresponding to each of the plurality of sleep levels that are sent by the terminal device, where the state transition duration is a time period required for the terminal device to transit from the sleep state to an active state.

Optionally, in the method according to Embodiment 4, the first message includes physical downlink control information DCI.

Optionally, in the method according to Embodiment 4, a frequency range of the first carrier is below 6 GHz, and/or a frequency range of the second carrier is a millimeter-wave band.

### Embodiment 5

A terminal device is provided, including: a transceiver, configured to receive, on a first carrier, a first message sent by a network device, where the first message indicates the terminal device to perform at least one of physical downlink control channel PDCCH monitoring and data transmission on a second carrier; and a processor, configured to: when the terminal device is in a sleep state on the second carrier, after a first duration, perform at least one of PDCCH monitoring and data transmission on the second carrier.

Optionally, in the terminal device according to Embodiment 5, the processor is further configured to start a first timer after the first duration, where the terminal device can perform at least one of PDCCH monitoring and data transmission on the second carrier in a running process of the first timer; or start the first timer when the first message is received, where the terminal device does not monitor a PDCCH or transmit data on the second carrier within the first duration.

Optionally, in the terminal device according to Embodiment 5, the processor is further configured to start a second timer after the first duration; or start the second timer when the first message is received, where the terminal device can perform at least one of PDCCH monitoring and data transmission on the first carrier in a running process of the second timer.

Optionally, in the terminal device according to Embodiment 5, the first duration is longer than or equal to a state transition duration, and the state transition duration is a time period required to wake up the terminal device from the sleep state.

Optionally, in the terminal device according to Embodiment 5, when the first message indicates the terminal device to transmit data on the second carrier, a time interval between the data and the first message is longer than or equal to the first duration.

Optionally, in the terminal device according to Embodiment 5, at least one sleep level is configured for the terminal device, and the transceiver is further configured to receive configuration information sent by the network device, where the configuration information indicates at least one duration, the at least one duration includes the first duration, and each of the at least one sleep level corresponds to one of the at least one duration.

Optionally, in the terminal device according to Embodiment 5, a plurality of durations in the at least one duration and a plurality of sleep levels in the at least one sleep level are configured for the terminal device, and the processor is further configured to determine the first duration from the plurality of durations based on a current sleep level.

Optionally, in the terminal device according to Embodiment 5, the transceiver is further configured to: when one sleep level is configured for the terminal device, send, to the network device, a state transition duration corresponding to the sleep level; or when a plurality of sleep levels are configured for the terminal device, send, to the network device, the plurality of sleep levels and a state transition duration corresponding to each of the plurality of sleep levels, where the state transition duration is a time period required to wake up the terminal device from the sleep state.

Optionally, in the terminal device according to Embodiment 5, the first message includes physical downlink control information DCI.

Optionally, in the terminal device according to Embodiment 5, when a preset condition is met, the first message indicates the terminal device to perform at least one of PDCCH monitoring and data transmission on the second carrier.

Optionally, in the terminal device according to Embodiment 5, the preset condition includes: The first message includes indication information; or the first message includes an indication field, and the indication field indicates the terminal device to perform at least one of PDCCH monitoring and data transmission on the second carrier; or an occasion on which the terminal device receives the first message meets a preset rule.

Optionally, in the terminal device according to Embodiment 5, a frequency range of the first carrier is below 6 GHz, and/or a frequency range of the second carrier is a millimeter-wave band.

### Embodiment 6

A network device is provided, including: a transceiver, configured to send a first message to a terminal device on a first carrier, where the first message indicates the terminal device to perform at least one of physical downlink control channel PDCCH monitoring and data transmission on a second carrier; and a processor, configured to: when the terminal device is in a sleep state on the second carrier, after a first duration, perform at least one of PDCCH sending and data transmission to the terminal device on the second carrier.

Optionally, in the network device according to Embodiment 6, the first duration is longer than or equal to a state transition duration, and the state transition duration is a time period required to wake up the terminal device from the sleep state.

Optionally, in the network device according to Embodiment 6, when the first message indicates the terminal device to transmit data on the second carrier, a time interval between the data and the first message is longer than or equal to the first duration.

Optionally, in the network device according to Embodiment 6, at least one sleep level is configured for the terminal device, and the transceiver is further configured to send configuration information to the terminal device, where the configuration information indicates at least one duration, the at least one duration includes the first duration, and each of the at least one sleep level corresponds to one of the at least one duration.

Optionally, in the network device according to Embodiment 6, the transceiver is further configured to: when one sleep level is configured for the terminal device, receive a state transition duration that corresponds to the sleep level and that is sent by the terminal device; or when a plurality of sleep levels are configured for the terminal device, receive the plurality of sleep levels and a state transition duration corresponding to each of the plurality of sleep levels that are sent by the terminal device, where the state transition duration is a time period required for the terminal device to transit from the sleep state to an active state.

Optionally, in the network device according to Embodiment 6, the first message includes physical downlink control information DCI.

Optionally, in the network device according to Embodiment 6, when a preset condition is met, the first message indicates the terminal device to perform at least one of PDCCH monitoring and data transmission on the second carrier.

Optionally, in the network device according to Embodiment 6, the preset condition includes: The first message includes indication information; or the first message includes an indication field, and the indication field indicates the terminal device to perform at least one of PDCCH monitoring and data transmission on the second carrier; or an occasion on which the network device sends the first message meets a preset rule.

Optionally, in the network device according to Embodiment 6, a frequency range of the first carrier is below 6 GHz, and/or a frequency range of the second carrier is a millimeter-wave band.

### Embodiment 7

A terminal device is provided, including: a transceiver, configured to receive, on a first carrier, a first message sent by a network device, where the first message indicates whether the terminal device starts a first timer on a second carrier; and a processor, configured to start the first timer based on the first message, where the terminal device performs at least one of physical downlink control channel PDCCH monitoring and data transmission on the second carrier in a running process of the first timer.

Optionally, in the terminal device according to Embodiment 7, the processor is specifically configured to: when the first message includes indication information, start the first timer; or when the first message includes an indication field and the indication field indicates to start the first timer, start the first timer; or when an occasion on which the terminal device receives the first message meets a preset rule, start the first timer.

Optionally, in the terminal device according to Embodiment 7, when the terminal device receives the first message, if the terminal device is in a sleep state on the second carrier, the processor is further configured to: after a first duration after the reception of the first message, perform at least one of physical downlink control channel PDCCH monitoring and data transmission on the second carrier.

Optionally, in the terminal device according to Embodiment 7, the processor is specifically configured to start the first timer after the first duration; or start the first timer when the first message is received, where the terminal device does not monitor a PDCCH or transmit data on the second carrier within the first duration.

Optionally, in the terminal device according to Embodiment 7, the processor is further configured to start a second timer after the first duration after the reception of the first message; or start the second timer when the first message is received, where the terminal device can perform at least one of PDCCH monitoring and data transmission on the first carrier in a running process of the second timer.

Optionally, in the terminal device according to Embodiment 7, the first duration is longer than or equal to a state transition duration, and the state transition duration is a time period required to wake up the terminal device from the sleep state.

Optionally, in the terminal device according to Embodiment 7, when the first message further indicates the terminal device to transmit data on the second carrier, a time interval between the data and the first message is longer than or equal to the first duration.

Optionally, in the terminal device according to Embodiment 7, at least one sleep level is configured for the terminal device, and the transceiver is further configured to receive configuration information sent by the network device, where the configuration information indicates at least one duration, the at least one duration includes the first duration, and each of the at least one sleep level corresponds to one of the at least one duration.

Optionally, in the terminal device according to Embodiment 7, a plurality of durations in the at least one duration and a plurality of sleep levels in the at least one sleep level are configured for the terminal device, and the processor is further configured to determine the first duration from the plurality of durations based on a current sleep level.

Optionally, in the terminal device according to Embodiment 7, the transceiver is further configured to: when one sleep level is configured for the terminal device, send, to the network device, a state transition duration corresponding to the sleep level; or when a plurality of sleep levels are configured for the terminal device, send, to the network device, the plurality of sleep levels and a state transition duration corresponding to each of the plurality of sleep levels, where the state transition duration is a time period required to wake up the terminal device from the sleep state.

Optionally, in the terminal device according to Embodiment 7, the first message includes physical downlink control information DCI.

Optionally, in the terminal device according to Embodiment 7, a frequency range of the first carrier is below 6 GHz, and/or a frequency range of the second carrier is a millimeter-wave band.

### Embodiment 8

A network device is provided, including: a transceiver, configured to send a first message to a terminal device on a first carrier, where the first message indicates whether the terminal device starts a first timer on a second carrier, and the terminal device can perform at least one of physical downlink control channel PDCCH monitoring and data transmission on the second carrier in a running process of the first timer.

Optionally, in the network device according to Embodiment 8, when the following condition is met, the first message indicates the terminal device to start the first timer on the second carrier: The first message includes indication information; or the first message includes an indication field and the indication field indicates to start the first timer; or a sending occasion of the first message meets a preset rule.

Optionally, in the network device according to Embodiment 8, the network device further includes a processor, and when the terminal device is in a sleep state, the processor is configured to: after a first duration after the sending of the first message, perform at least one of PDCCH sending and data transmission to the terminal device on the second carrier.

Optionally, in the network device according to Embodiment 8, the first duration is longer than or equal to a state transition duration, and the state transition duration is a time period required to wake up the terminal device from the sleep state.

Optionally, in the network device according to Embodiment 8, at least one sleep level is configured for the terminal device, and the transceiver is further configured to send configuration information to the terminal device, where the configuration information indicates at least one duration, the at least one duration includes the first duration, and each of the at least one sleep level corresponds to one of the at least one duration.

Optionally, in the network device according to Embodiment 8, the transceiver is further configured to: when one sleep level is configured for the terminal device, receive a state transition duration that corresponds to the sleep level and that is sent by the terminal device; or when a plurality of sleep levels are configured for the terminal device, receive the plurality of sleep levels and a state transition duration corresponding to each of the plurality of sleep levels that are sent by the terminal device, where the state transition duration is a time period required for the terminal device to transit from the sleep state to an active state.

Optionally, in the network device according to Embodiment 8, the first message includes physical downlink control information DCI.

Optionally, in the network device according to Embodiment 8, a frequency range of the first carrier is below 6 GHz, and/or a frequency range of the second carrier is a millimeter-wave band.

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a terminal device on a first carrier, a first message sent by a network device, wherein the first message indicates the terminal device to perform at least one of physical downlink control channel PDCCH monitoring and data transmission on a second carrier; and
when the terminal device is in a sleep state on the second carrier, after a first duration, performing, by the terminal device, at least one of PDCCH monitoring and data transmission on the second carrier.

2. The method according to claim 1, further comprising:
starting, by the terminal device, a first timer after the first duration, wherein the terminal device can perform at least one of PDCCH monitoring and data transmission on the second carrier in a running process of the first timer; or
starting, by the terminal device, the first timer when receiving the first message, wherein the terminal device does not monitor a PDCCH or transmit data on the second carrier within the first duration.

3. The method according to claim 2, further comprising:
starting, by the terminal device, a second timer after the first duration; or
starting, by the terminal device, the second timer when receiving the first message, wherein
the terminal device can perform at least one of PDCCH monitoring and data transmission on the first carrier in a running process of the second timer.

4. The method according to any one of claims 1 to 3, wherein the first duration is longer than or equal to a state transition duration, and the state transition duration is a time period required to wake up the terminal device from the sleep state.

5. The method according to any one of claims 1 to 4, wherein when the first message indicates the terminal device to transmit data on the second carrier, a time interval between the data and the first message is longer than or equal to the first duration.

6. The method according to any one of claims 1 to 5, wherein when a preset condition is met, the first message indicates the terminal device to perform at least one of PDCCH monitoring and data transmission on the second carrier.

7. The method according to claim 6, wherein the preset condition comprises:
the first message comprises indication information; or
the first message comprises an indication field, and the indication field indicates the terminal device to perform at least one of PDCCH monitoring and data transmission on the second carrier; or
an occasion on which the terminal device receives the first message meets a preset rule.

8. The method according to any one of claims 1 to 7, wherein a frequency range of the first carrier is below 6 GHz, and/or a frequency range of the second carrier is a millimeter-wave band.

9. A wireless communication method, comprising:
sending, by a network device, a first message to a terminal device on a first carrier, wherein the first message indicates the terminal device to perform at least one of physical downlink control channel PDCCH monitoring and data transmission on a second carrier; and
when the terminal device is in a sleep state on the second carrier, after a first duration, performing, by the network device, at least one of PDCCH sending and data transmission to the terminal device on the second carrier.

10. The method according to claim 9, wherein the first duration is longer than or equal to a state transition duration, and the state transition duration is a time period required to wake up the terminal device from the sleep state.

11. The method according to claim 9 or 10, wherein when the first message indicates the terminal device to transmit data on the second carrier, a time interval between the data and the first message is longer than or equal to the first duration.

12. The method according to any one of claims 9 to 11, wherein when a preset condition is met, the first message indicates the terminal device to perform at least one of PDCCH monitoring and data transmission on the second carrier.

13. The method according to claim 12, wherein the preset condition comprises:
the first message comprises indication information; or
the first message comprises an indication field, and the indication field indicates the terminal device to perform at least one of PDCCH monitoring and data transmission on the second carrier; or
an occasion on which the network device sends the first message meets a preset rule.

14. The method according to any one of claims 9 to 13, wherein a frequency range of the first carrier is below 6 GHz, and/or a frequency range of the second carrier is a millimeter-wave band.

15. A terminal device, comprising:
a transceiver, configured to receive, on a first carrier, a first message sent by a network device, wherein the first message indicates the terminal device to perform at least one of physical downlink control channel PDCCH monitoring and data transmission on a second carrier; and
a processor, configured to: when the terminal device is in a sleep state on the second carrier, after a first duration, perform at least one of PDCCH monitoring and data transmission on the second carrier.

16. The terminal device according to claim 15, wherein the processor is further configured to:
start a first timer after the first duration, wherein the terminal device can perform at least one of PDCCH monitoring and data transmission on the second carrier in a running process of the first timer; or
start the first timer when receiving the first message, wherein the terminal device does not monitor a PDCCH or transmit data on the second carrier within the first duration.

17. The terminal device according to claim 16, wherein the processor is further configured to:
start a second timer after the first duration; or
start the second timer when the first message is received, wherein
the terminal device can perform at least one of PDCCH monitoring and data transmission on the first carrier in a running process of the second timer.

18. The terminal device according to any one of claims 15 to 17, wherein the first duration is longer than or equal to a state transition duration, and the state transition duration is a time period required to wake up the terminal device from the sleep state.

19. The terminal device according to any one of claims 15 to 18, wherein when the first message indicates the terminal device to transmit data on the second carrier, a time interval between the data and the first message is longer than or equal to the first duration.

20. The terminal device according to any one of claims 15 to 19, wherein when a preset condition is met, the first message indicates the terminal device to perform at least one of PDCCH monitoring and data transmission on the second carrier.

21. The terminal device according to claim 20, wherein the preset condition comprises:
the first message comprises indication information; or
the first message comprises an indication field, and the indication field indicates the terminal device to perform at least one of PDCCH monitoring and data transmission on the second carrier; or
an occasion on which the terminal device receives the first message meets a preset rule.

22. The terminal device according to any one of claims 15 to 21, wherein a frequency range of the first carrier is below 6 GHz, and/or a frequency range of the second carrier is a millimeter-wave band.

23. A network device, comprising:
a transceiver, configured to send a first message to a terminal device on a first carrier, wherein the first message indicates the terminal device to perform at least one of physical downlink control channel PDCCH monitoring and data transmission on a second carrier; and
a processor, configured to: when the terminal device is in a sleep state on the second carrier, after a first duration, perform at least one of PDCCH sending and data transmission to the terminal device on the second carrier.

24. The network device according to claim 23, wherein the first duration is longer than or equal to a state transition duration, and the state transition duration is a time period required to wake up the terminal device from the sleep state.

25. The network device according to claim 23 or 24, wherein when the first message indicates the terminal device to transmit data on the second carrier, a time interval between the data and the first message is longer than or equal to the first duration.

26. The network device according to any one of claims 23 to 25, wherein when a preset condition is met, the first message indicates the terminal device to perform at least one of PDCCH monitoring and data transmission on the second carrier.

27. The network device according to claim 26, wherein the preset condition comprises:
the first message comprises indication information; or
the first message comprises an indication field, and the indication field indicates the terminal device to perform at least one of PDCCH monitoring and data transmission on the second carrier; or
an occasion on which the network device sends the first message meets a preset rule.

28. The network device according to any one of claims 23 to 27, wherein a frequency range of the first carrier is below 6 GHz, and/or a frequency range of the second carrier is a millimeter-wave band.

29. A computer-readable storage medium, storing a computer program, wherein when the computer program is run on a computer, the computer is enabled to perform the method according to any one of claims 1 to 8, or the computer is enabled to perform the method according to any one of claims 9 to 14.
